# EUROPEAN PATENT APPLICATION

(11) **EP 4 184 978 A1**
(43) Date of publication of application: **24.05.2023**
(21) Application number: 20946792.7
(22) Date of filing: 30.07.2020
(51) Int. Cl.: H04W 12/08

(54) **COMMUNICATION METHOD AND APPARATUS**

(71) Applicant: Huawei Technologies Co., Ltd., Shenzhen, Guangdong 518129 (CN)
(72) Inventor: ZHANG, Bo, Shenzhen, Guangdong 518129 (CN)
(74) Representative: Pfenning, Meinig & Partner mbB
(86) International application number: PCT/CN2020/105752
(87) International publication number: WO 2022/021197

(57) **Abstract**

Embodiments of this application provide a communication method. Embodiments of this application include: A first terminal device determines a first security policy corresponding to a service to be used by the first terminal device; the first terminal device sends the first security policy to a second terminal device; the second terminal device receives the first security policy, and sends the first security policy to a third terminal device; the third terminal device determines a first security protection manner according to the first security policy; the third terminal device sends the first security protection manner to the second terminal device, where the first security protection manner is a security protection manner between the second terminal device and the third terminal device; and the second terminal device receives the first security protection manner, and sends the first security protection manner to the first terminal device, where the first security protection manner is a security protection manner between the first terminal device and the second terminal device.

## Description

### TECHNICAL FIELD

This application relates to the field of communication technologies, and in particular, to a communication method and an apparatus thereof.

### BACKGROUND

In a proximity-based service communication scenario, user equipment (user equipment, UE 1) implements communication with UE 3 via UE 2. The UE 1 and the UE 2 are connected through a prose communication 5 (prose communication 5, PCS) interface, and the UE 2 and the UE 3 are also connected through a PCS interface. In a scenario in which relay is performed via the UE 2, how to ensure security of data exchanged between the UE 1 and the UE 3 is an urgent problem to be resolved.

### SUMMARY

Embodiments of this application provide a communication method, to implement negotiation consistency between a security protection manner between a first terminal device and a second terminal device and a security protection manner between the second terminal device and a third terminal device, and improve security of data or signaling exchanged between the first terminal device and the third terminal device.

A first aspect of embodiments of this application provides a communication method, and the communication method includes:

A first terminal device determines a first security policy corresponding to a service to be used by the first terminal device; then, the first terminal device sends the first security policy to a second terminal device; the second terminal device receives the first security policy, and sends the first security policy to a third terminal device; the third terminal device determines a first security protection manner according to the first security policy; the third terminal device sends the first security protection manner to the second terminal device, where the first security protection manner is a security protection manner between the second terminal device and the third terminal device; and the second terminal device receives the first security protection manner, and sends the first security protection manner to the first terminal device, where the first security protection manner is a security protection manner between the first terminal device and the second terminal device.

In this embodiment, the third terminal device determines the first security protection manner according to the first security policy, and then sends the first security protection manner to the second terminal device. Then, the second terminal device receives the first security protection manner, and sends the first security protection manner to the first terminal device, to implement negotiation consistency between the security protection manner between the first terminal device and the second terminal device and the security protection manner between the second terminal device and the third terminal device, and improve security of transmitting signaling and data between the first terminal device and the third terminal device.

In a possible implementation, the method further includes: The first terminal device sends first service information to the second terminal device, where the first service information is service information corresponding to the service to be used by the first terminal device; then, the second terminal device receives the first service information, and sends the first service information to the third terminal device; and the third terminal device determines, based on the first service information, a second security policy corresponding to the service to be used by the first terminal device. That the third terminal device determines a first security protection manner according to the first security policy includes: The third terminal device determines the first security protection manner according to the first security policy and the second security policy.

In this possible implementation, the third terminal device determines, based on the first service information, the second security policy corresponding to the service to be used by the first terminal device, so that the third terminal device can determine the first security protection manner according to the first security policy and the second security policy. This helps implement negotiation consistency between the security protection manner between the first terminal device and the second terminal device and the security protection manner between the second terminal device and the third terminal device.

In another possible implementation, the method further includes: The first terminal device sends a security capability of the first terminal device to the second terminal device; the second terminal device receives the security capability of the first terminal device; the second terminal device sends the security capability of the first terminal device and a security capability of the second terminal device to the third terminal device; the third terminal device receives the security capability of the first terminal device and the security capability of the second terminal device that are sent by the second terminal device; the third terminal device determines a first encryption algorithm and a first integrity protection algorithm based on a security capability of the third terminal device, the security capability of the first terminal device, and the security capability of the second terminal device; the third terminal device sends the first encryption algorithm and the first integrity protection algorithm to the second terminal device; and the second terminal device receives the first encryption algorithm and the first integrity protection algorithm, and sends the first encryption algorithm and the first integrity protection algorithm to the first terminal device.

In this possible implementation, the third terminal device may determine the first encryption algorithm and the first integrity protection algorithm based on all of the security capability of the third terminal device, the security capability of the first terminal device, and the security capability of the second terminal device. In this way, the third terminal device may subsequently determine, based on the first security protection manner, the first encryption algorithm, and the first integrity protection algorithm, to perform security protection on data or signaling of the first terminal device by using the first encryption algorithm and the first integrity protection algorithm.

In another possible implementation, the method further includes: The first terminal device sends first protection indication information to the second terminal device, where the first protection indication information indicates a protection mechanism between the first terminal device and the third terminal device; the second terminal device receives the first protection indication information, and sends the first protection indication information to the third terminal device; the third terminal device determines second protection indication information based on the first protection indication information, where the second protection indication information indicates the protection mechanism between the first terminal device and the third terminal device; the third terminal device sends a first message to the second terminal device, where the first message carries the second protection indication information; and the second terminal device receives a second message, and sends the second message to the first terminal device, where the second message carries the second protection indication information.

In this possible implementation, an implementation in which the first terminal device, the second terminal device, and the third terminal device negotiate the protection mechanism between the first terminal device and the third terminal device is provided.

In another possible implementation, before the second terminal device receives a second message, and sends the second message to the first terminal device, the method further includes: When the second protection indication information indicates a hop-by-hop protection mechanism, the third terminal device performs integrity protection on the first message by using a first shared key and the first integrity protection algorithm, where the first shared key is a shared key between the second terminal device and the third terminal device. That the second terminal device receives a second message, and sends the second message to the first terminal device includes: The second terminal device receives the first message sent by the third terminal device; the second terminal device performs integrity verification on the first message by using the first shared key and the first integrity protection algorithm; when the verification succeeds, the second terminal device generates the second message, and performs integrity protection on the second message by using a second shared key and the first integrity protection algorithm, where the second message carries the second protection indication information, and the second shared key is a shared key between the first terminal device and the second terminal device; and the second terminal device sends the second message to the first terminal device.

In this possible implementation, when the second protection indication information indicates the hop-by-hop protection mechanism, a message sending manner and a verification process of the second terminal device are the same as those of the third terminal device.

In another possible implementation, the method further includes: The first terminal device receives the second message; the first terminal device performs integrity verification on the second message by using the second shared key and the first integrity protection algorithm; and when the verification succeeds, the first terminal device determines the hop-by-hop protection mechanism indicated by the second protection indication information.

In this possible implementation, when the second protection indication information indicates the hop-by-hop protection mechanism, a process in which the first terminal device verifies the second message is shown.

A second aspect of embodiments of this application provides a communication method, and the communication method includes:

A first terminal device determines a first security policy corresponding to a service to be used by the first terminal device; the first terminal device sends the first security policy to a second terminal device, where the first terminal device communicates with a third terminal device via the second terminal device; and the first terminal device receives a first security protection manner sent by the second terminal device, where the first security protection manner is a security protection manner between the first terminal device and the second terminal device.

In this possible implementation, the first terminal device determines the first security policy, and sends the first security policy to the second terminal device, so that the third terminal device can determine the first security protection manner by receiving the first security policy of the first terminal device. In this way, the first terminal device may receive the first security protection manner, to implement negotiation consistency between the security protection manner between the first terminal device and the second terminal device and a security protection manner between the second terminal device and the third terminal device, and improve security of data or signaling exchanged between the first terminal device and the third terminal device.

In a possible implementation, the method further includes: The first terminal device sends first service information to the second terminal device, where the first service information is service information corresponding to the service to be used by the first terminal device.

In this possible implementation, the first terminal device further sends the first service information to the second terminal device. In this way, the second terminal device may determine a second security policy based on the first service information, and send the second security policy to the third terminal device, so that the third terminal device can determine the first security protection manner. This helps implement negotiation consistency between the security protection manner between the first terminal device and the second terminal device and the security protection manner between the second terminal device and the third terminal device.

In another possible implementation, the method further includes: The first terminal device sends a security capability of the first terminal device to the second terminal device; and the first terminal device receives a first encryption algorithm and a first integrity protection algorithm that are sent by the second terminal device.

In this possible implementation, the first terminal device sends the security capability of the first terminal device to the second terminal device, so that the third terminal device can determine the first encryption algorithm and the first integrity protection algorithm based on all of a security capability of the third terminal device, the security capability of the first terminal device, and a security capability of the second terminal device. In this way, the third terminal device may subsequently determine, based on the first security protection manner, the first encryption algorithm, and the first integrity protection algorithm, to perform security protection on data or signaling of the first terminal device by using the first encryption algorithm and the first integrity protection algorithm.

In another possible implementation, the method further includes: The first terminal device sends first protection indication information to the second terminal device, where the first protection indication information indicates a protection mechanism between the first terminal device and the third terminal device; and the first terminal device receives a second message sent by the second terminal device, where the second message carries second protection indication information, and the second protection indication information indicates the protection mechanism between the first terminal device and the third terminal device.

In this possible implementation, a manner in which the first terminal device, the second terminal device, and the third terminal device negotiate the protection mechanism between the first terminal device and the third terminal device is provided.

In another possible implementation, that the first terminal device receives a second message sent by the second terminal device includes: The first terminal device receives the second message sent by the second terminal device, where the second message carries the second protection indication information, the second message is obtained by performing integrity protection on the second message by using a second shared key and the first integrity protection algorithm, and the second shared key is a shared key between the first terminal device and the second terminal device; the first terminal device performs integrity verification on the second message by using the second shared key and the first integrity protection algorithm; and when the verification succeeds, the first terminal device determines a hop-by-hop protection mechanism indicated by the second protection indication information.

In this possible implementation, when the second protection indication information indicates the hop-by-hop protection mechanism, a process in which the first terminal device processes the received second message is shown.

A third aspect of embodiments of this application provides a communication method, and the method includes:

A second terminal device receives a first security policy sent by a first terminal device, where the first security policy is a security policy that is determined by the first terminal device and that corresponds to a service to be used by the first terminal device, and the first terminal device communicates with a third terminal device via the second terminal device; then, the second terminal device sends the first security policy to the third terminal device; the second terminal device receives a first security protection manner sent by the third terminal device, where the first security protection manner is a security protection manner between the second terminal device and the third terminal device; and the second terminal device sends the first security protection manner to the first terminal device, where the first security protection manner is a security protection manner between the first terminal device and the second terminal device.

In this possible implementation, the second terminal device receives the first security policy sent by the first terminal device, and sends the first security policy to the third terminal device, so that the third terminal device can determine the first security protection manner by receiving the first security policy of the first terminal device. In this way, the second terminal device may receive the first security protection manner, and send the first security protection manner to the first terminal device, to implement negotiation consistency between the security protection manner between the first terminal device and the second terminal device and the security protection manner between the second terminal device and the third terminal device, and improve security of data or signaling exchanged between the first terminal device and the third terminal device.

In a possible implementation, the method further includes: The second terminal device receives first service information sent by the first terminal device, where the first service information is service information corresponding to the service to be used by the first terminal device; and the second terminal device sends the first service information to the third terminal device.

In this possible implementation, the second terminal device receives the first service information sent by the first terminal device, and sends the first service information to the third terminal device, so that the third terminal device can determine the first security protection manner. This helps implement negotiation consistency between the security protection manner between the first terminal device and the second terminal device and the security protection manner between the second terminal device and the third terminal device.

In another possible implementation, the method further includes: The second terminal device receives a security capability that is of the first terminal device and that is sent by the first terminal device; the second terminal device sends the security capability of the first terminal device and a security capability of the second terminal device to the third terminal device; the second terminal device receives a first encryption algorithm and a first integrity protection algorithm that are sent by the third terminal device; and the second terminal device sends the first encryption algorithm and the first integrity protection algorithm to the first terminal device.

In this possible implementation, the first terminal device sends the security capability of the first terminal device to the second terminal device. Then, the second terminal device sends the security capability of the first terminal device and the security capability of the second terminal device to the third terminal device, so that the third terminal device can determine the first encryption algorithm and the first integrity protection algorithm based on all of a security capability of the third terminal device, the security capability of the first terminal device, and the security capability of the second terminal device. In this way, the third terminal device may subsequently determine, based on the first security protection manner, the first encryption algorithm, and the first integrity protection algorithm, to perform security protection on data or signaling of the first terminal device by using the first encryption algorithm and the first integrity protection algorithm.

In another possible implementation, the method further includes: The second terminal device receives first protection indication information sent by the first terminal device, where the first protection indication information indicates a protection mechanism between the first terminal device and the third terminal device; the second terminal device sends the first protection indication information to the third terminal device; the second terminal device receives a first message sent by the third terminal device, where the first message carries second protection indication information; and the second terminal device sends a second message to the first terminal device, where the second message carries the second protection indication information.

In this possible implementation, a manner in which the first terminal device, the second terminal device, and the third terminal device negotiate a protection mechanism is shown.

In another possible implementation, that the second terminal device sends a second message to the first terminal device includes:

The second terminal device performs integrity verification on the first message by using a first shared key and the first integrity protection algorithm, where the first shared key is a shared key between the second terminal device and the third terminal device; when the verification succeeds, the second terminal device generates the second message, and performs integrity protection on the second message by using a second shared key and the first integrity protection algorithm, where the second message carries the second protection indication information, and the second shared key is a shared key between the first terminal device and the second terminal device; and the second terminal device sends the second message to the first terminal device.

In this possible implementation, when the second protection indication information indicates a hop-by-hop protection mechanism, a process in which the second terminal device processes the received first message, and a process in which the second terminal device generates and sends the second message are shown, to avoid the second message from being tampered with.

A fourth aspect of embodiments of this application provides a communication method, and the method includes:

A third terminal device receives a first security policy sent by a second terminal device, where the first security policy is a security policy that is determined by a first terminal device and that corresponds to a service to be used by the first terminal device, and the first terminal device communicates with the third terminal device via the second terminal device; the third terminal device determines a first security protection manner according to the first security policy; and the third terminal device sends the first security protection manner to the second terminal device, where the first security protection manner is a security protection manner between the second terminal device and the third terminal device.

In this embodiment, the third terminal device receives the first security policy determined by the first terminal device, determines the first security protection manner according to the first security policy, and then sends the first security protection manner to the second terminal device. This implements negotiation consistency between a security protection manner between the first terminal device and the second terminal device and the security protection manner between the second terminal device and the third terminal device, and improve security of data or signaling exchanged between the first terminal device and the third terminal device.

In a possible implementation, the method further includes: The third terminal device receives first service information sent by the first terminal device, where the first service information is service information corresponding to the service to be used by the first terminal device; and the third terminal device determines, based on the first service information, a second security policy corresponding to the service to be used by the first terminal device. That the third terminal device determines a first security protection manner according to the first security policy includes: The third terminal device determines the first security protection manner according to the first security policy and the second security policy.

In this possible implementation, the third terminal device receives the first service information sent by the first terminal device, so that the third terminal device can determine the second security policy based on the received first service information, and then determine the first security protection manner according to the first security policy and the second security policy. This helps implement negotiation consistency between the security protection manner between the first terminal device and the second terminal device and the security protection manner between the second terminal device and the third terminal device.

In another possible implementation, the method further includes: The third terminal device receives a security capability of the first terminal device and a security capability of the second terminal device that are sent by the second terminal device; the third terminal device determines a first encryption algorithm and a first integrity protection algorithm based on a security capability of the third terminal device, the security capability of the first terminal device, and the security capability of the second terminal device; and the third terminal device sends the first encryption algorithm and the first integrity protection algorithm to the second terminal device.

In this possible implementation, the third terminal device may determine the first encryption algorithm and the first integrity protection algorithm based on all of the security capability of the third terminal device, the security capability of the first terminal device, and the security capability of the second terminal device. In this way, the third terminal device may subsequently determine, based on the first security protection manner, the first encryption algorithm, and the first integrity protection algorithm, to perform security protection on data or signaling of the first terminal device by using the first encryption algorithm and the first integrity protection algorithm.

In another possible implementation, the method further includes: The third terminal device receives first protection indication information sent by the second terminal device, where the first protection indication information indicates a protection mechanism between the first terminal device and the third terminal device; the third terminal device determines second protection indication information based on the first protection indication information, where the second protection indication information indicates the protection mechanism between the first terminal device and the third terminal device; and the third terminal device sends a first message to the second terminal device, where the first message carries the second protection indication information.

In this possible implementation, a manner in which the first terminal device, the second terminal device, and the third terminal device negotiate the protection mechanism between the first terminal device and the third terminal device is shown.

In another possible implementation, before the third terminal device sends a first message to the second terminal device, the method further includes: When the second protection indication information indicates a hop-by-hop protection mechanism, the third terminal device performs integrity protection on the first message by using a first shared key and the first integrity protection algorithm, where the first shared key is a shared key between the second terminal device and the third terminal device.

In this possible implementation, when the second protection indication information indicates the hop-by-hop protection mechanism, the third terminal device performs integrity protection on the first message by using the first shared key and the first integrity protection algorithm, so that the first message can be tampered with in a transmission process.

A fifth aspect of embodiments of this application provides a first terminal device, and the first terminal device includes:
a processing module, configured to determine a first security policy corresponding to a service to be used by the first terminal device; and
a transceiver module, configured to send the first security policy to a second terminal device, where the first terminal device communicates with a third terminal device via the second terminal device, where
the transceiver module is further configured to receive a first security protection manner sent by the second terminal device, where the first security protection manner is a security protection manner between the first terminal device and the second terminal device.

In a possible implementation, the transceiver module is further configured to:
send first service information to the second terminal device, where the first service information is service information corresponding to the service to be used by the first terminal device.

In another possible implementation, the transceiver module is further configured to:
send a security capability of the first terminal device to the second terminal device; and
receive a first encryption algorithm and a first integrity protection algorithm that are sent by the second terminal device.

In another possible implementation, the transceiver module is further configured to:
send first protection indication information to the second terminal device, where the first protection indication information indicates a protection mechanism between the first terminal device and the third terminal device; and
receive a second message sent by the second terminal device, where the second message carries second protection indication information, and the second protection indication information indicates the protection mechanism between the first terminal device and the third terminal device.

In another possible implementation, the transceiver module is further configured to:
receive the second message sent by the second terminal device, where the second message carries the second protection indication information, the second message is obtained by performing integrity protection on the second message by using a second shared key and the first integrity protection algorithm, and the second shared key is a shared key between the first terminal device and the second terminal device;
perform integrity verification on the second message by using the second shared key and the first integrity protection algorithm; and
when the verification succeeds, determine a hop-by-hop protection mechanism indicated by the second protection indication information.

A sixth aspect of embodiments of this application provides a second terminal device, and the second terminal device includes:
a transceiver module, configured to: receive a first security policy sent by a first terminal device, where the first security policy is a security policy that is determined by the first terminal device and that corresponds to a service to be used by the first terminal device, and the first terminal device communicates with a third terminal device via the second terminal device; send the first security policy to the third terminal device; receive a first security protection manner sent by the third terminal device, where the first security protection manner is a security protection manner between the second terminal device and the third terminal device; and send the first security protection manner to the first terminal device, where the first security protection manner is a security protection manner between the first terminal device and the second terminal device.

In a possible implementation, the transceiver module is further configured to:
receive first service information sent by the first terminal device, where the first service information is service information corresponding to the service to be used by the first terminal device; and send the first service information to the third terminal device.

In another possible implementation, the transceiver module is further configured to:
receive a security capability that is of the first terminal device and that is sent by the first terminal device; send the security capability of the first terminal device and a security capability of the second terminal device to the third terminal device; receive a first encryption algorithm and a first integrity protection algorithm that are sent by the third terminal device; and send the first encryption algorithm and the first integrity protection algorithm to the first terminal device.

In another possible implementation, the transceiver module is further configured to:
receive first protection indication information sent by the first terminal device, where the first protection indication information indicates a protection mechanism between the first terminal device and the third terminal device; send the first protection indication information to the third terminal device; receive a first message sent by the third terminal device, where the first message carries second protection indication information; and send a second message to the first terminal device, where the second message carries the second protection indication information.

In another possible implementation, the transceiver module is specifically configured to:
perform integrity verification on the first message by using a first shared key and the first integrity protection algorithm, where the first shared key is a shared key between the second terminal device and the third terminal device; when the verification succeeds, generate the second message, and perform integrity protection on the second message by using a second shared key and the first integrity protection algorithm, where the second message carries the second protection indication information, and the second shared key is a shared key between the first terminal device and the second terminal device; and send the second message to the first terminal device.

A seventh aspect of embodiments of this application provides a third terminal device, and the third terminal device includes:
a transceiver module, configured to receive a first security policy sent by a second terminal device, where the first security policy is a security policy that is determined by a first terminal device and that corresponds to a service to be used by the first terminal device, and the first terminal device communicates with the third terminal device via the second terminal device; and
a processing module, configured to determine a first security protection manner according to the first security policy, where
the transceiver module is further configured to send the first security protection manner to the second terminal device, where the first security protection manner is a security protection manner between the second terminal device and the third terminal device.

In a possible implementation, the transceiver module is further configured to:
receive first service information sent by the second terminal device, where the first service information is service information corresponding to the service to be used by the first terminal device;
the processing module is further configured to:
   determine, based on the first service information, a second security policy corresponding to the service to be used by the first terminal device; and
   the processing module is specifically configured to:
      determine the first security protection manner according to the first security policy and the second security policy.
In another possible implementation, the transceiver module is further configured to:
   receive a security capability of the first terminal device and a security capability of the second terminal device that are sent by the second terminal device;
   the processing module is further configured to:
      determine a first encryption algorithm and a first integrity protection algorithm based on a security capability of the third terminal device, the security capability of the first terminal device, and the security capability of the second terminal device; and
   the transceiver module is further configured to:
      send the first encryption algorithm and the first integrity protection algorithm to the second terminal device.
In another possible implementation, the transceiver module is further configured to:
   receive first protection indication information sent by the second terminal device, where the first protection indication information indicates a protection mechanism between the first terminal device and the third terminal device;
   the processing module is further configured to:
      determine second protection indication information based on the first protection indication information, where the second protection indication information indicates the protection mechanism between the first terminal device and the third terminal device; and
      the transceiver module is further configured to:
         send a first message to the second terminal device, where the first message carries the second protection indication information.

In another possible implementation, the processing module is further configured to:
when the second protection indication information indicates a hop-by-hop protection mechanism, perform integrity protection on the first message by using a first shared key and the first integrity protection algorithm, where the first shared key is a shared key between the second terminal device and the third terminal device.

An eighth aspect of embodiments of this application provides a first terminal device, and the first terminal device includes a processor and a memory. The memory stores a computer program. The processor is configured to invoke and run the computer program stored in the memory, to enable the processor to implement some or all of the steps performed by the first terminal device in the first aspect, and implement any implementation of the second aspect.

Optionally, the first terminal device further includes a transceiver. The processor is further configured to control the transceiver to receive and send a signal.

A ninth aspect of embodiments of this application provides a second terminal device, and the second terminal device includes a processor and a memory. The memory stores a computer program. The processor is configured to invoke and run the computer program stored in the memory, to enable the processor to implement some or all of the steps performed by the second terminal device in the first aspect, and implement any implementation of the third aspect.

Optionally, the second terminal device further includes a transceiver. The processor is further configured to control the transceiver to receive and send a signal.

A tenth aspect of embodiments of this application provides a third terminal device, and the third terminal device includes a processor and a memory. The memory stores a computer program. The processor is configured to invoke and run the computer program stored in the memory, to enable the processor to implement some or all of the steps performed by the third terminal device in the first aspect, and implement any implementation of the fourth aspect.

Optionally, the third terminal device further includes a transceiver. The processor is further configured to control the transceiver to receive and send a signal.

An eleventh aspect of embodiments of this application provides a computer program product including instructions. When the computer program product runs on a computer, the computer is enabled to perform any implementation of the first aspect to the fourth aspect.

A twelfth aspect of embodiments of this application provides a computer-readable storage medium, including computer instructions. When the computer instructions are run on a computer, the computer is enabled to perform any implementation of the first aspect to the fourth aspect.

A thirteenth aspect of embodiments of this application provides a chip apparatus, including a processor, configured to: be connected to a memory, and invoke a program stored in the memory, to enable the processor to perform any implementation of the first aspect to the fourth aspect.

A fourteenth aspect of embodiments of this application provides a communication system. The communication system includes the first terminal device in the second aspect, the second terminal device in the third aspect, and the third terminal device in the fourth aspect.

It can be learned from the foregoing technical solution that, a first terminal device determines a first security policy corresponding to a service to be used by the first terminal device; then, the first terminal device sends the first security policy to a second terminal device; the second terminal device receives the first security policy, and sends the first security policy to a third terminal device; then, the third terminal device determines a first security protection manner according to the first security policy; the third terminal device sends the first security protection manner to the second terminal device, where the first security protection manner is a security protection manner between the second terminal device and the third terminal device; and the second terminal device receives the first security protection manner, and sends the first security protection manner to the first terminal device, where the first security protection manner is a security protection manner between the first terminal device and the second terminal device. It can be learned that, in the technical solution in embodiments of this application, the third terminal device determines the first security protection manner according to the first security policy, and then sends the first security protection manner to the second terminal device. Then, the second terminal device receives the first security protection manner, and sends the first security protection manner to the first terminal device, to implement negotiation consistency between the security protection manner between the first terminal device and the second terminal device and the security protection manner between the second terminal device and the third terminal device, and improve security of transmitting signaling and data between the first terminal device and the third terminal device.

### BRIEF DESCRIPTION OF DRAWINGS

FIG. 1 is a schematic diagram of a network system according to an embodiment of this application;
FIG. 2A-1 and FIG. 2A-2 are a schematic diagram of an embodiment of a communication method according to embodiments of this application;
FIG. 2B is a schematic diagram of deriving a shared key according to an embodiment of this application;
FIG. 3A and FIG. 3B are a schematic diagram of another embodiment of a communication method according to embodiments of this application;
FIG. 4 is a schematic diagram of another embodiment of a communication method according to embodiments of this application;
FIG. 5 is a schematic diagram of a structure of a first terminal device according to an embodiment of this application;
FIG. 6 is a schematic diagram of a structure of a second terminal device according to an embodiment of this application;
FIG. 7 is a schematic diagram of a structure of a third terminal device according to an embodiment of this application;
FIG. 8 is a schematic diagram of another structure of a first terminal device according to an embodiment of this application;
FIG. 9 is a schematic diagram of another structure of a second terminal device according to an embodiment of this application;
FIG. 10 is a schematic diagram of another structure of a third terminal device according to an embodiment of this application; and
FIG. 11 is a schematic diagram of a communication system according to an embodiment of this application.

### DESCRIPTION OF EMBODIMENTS

To make objectives, technical solutions, and advantages of this application clearer, the following further describes this application with reference to the accompanying drawings.

In the specification, claims, and accompanying drawings of this application, the terms "including", "having", and any variation thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

In this application, "at least one (item)" means one or more, "a plurality of" means two or more, "at least two (items)" means two, three, or more, and " and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including any combination of singular items (pieces) or plural items (pieces). For example, at least one item (piece) of a, b, or c may indicate: a, b, c, "a and b", "a and c", "b and c", or "a, b, and c", where a, b, and c may be singular or plural.

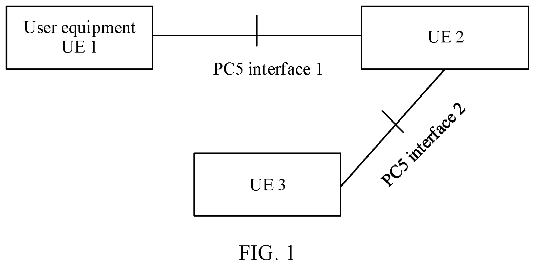

FIG. 1 is a schematic architectural diagram of a network system according to an embodiment of this application. The network system includes UE 1, UE 2, and UE 3. The UE 1 and the UE 2 are connected through a PCS interface 1, and the UE 2 and the UE 3 are also connected through a PCS interface 2. The UE 1 communicates with the UE 3 via the UE 2. The UE 2 plays a role of a UE-to-network relay. In other words, the UE 2 serves as a relay node, and is configured to: provide a relay service for the UE 1 and assist in communication between the UE 1 and the UE 3. The UE 1 and the UE 3 are common UEs, and may complete communication with other UE via a UE relay.

Currently, each PCS interface has corresponding on demand security (on demand security). To be specific, security manners corresponding to different PCS interfaces are determined according to security policies, and may be determined through negotiation.

The security policy includes a control plane security policy and/or a user plane security policy. Each security policy includes two characteristics: encryption protection and integrity protection. Three requirements on encryption protection of each security policy are respectively: encryption protection is required, encryption protection is expected or encryption protection is preferred, and encryption protection is not needed. Three requirements on integrity protection of each security policy are respectively: integrity protection is required, integrity protection is expected or integrity protection is preferred, and integrity protection is not needed. The security protection manner includes enabling encryption protection or disabling encryption protection, and enabling integrity protection or disabling integrity protection.

The UE 1 sends data or signaling to the UE 3 via the UE 2. Herein, the sending of data is used as an example for description. If encryption protection is performed on data sent by the UE 1 to the UE 2 through the PCS interface 1, but encryption protection is not performed on the data sent by the UE 2 to the UE 3 through the PCS interface 2, an attacker may eavesdrop on the PCS interface 2 between the UE 2 and the UE 3, to eavesdrop on or tamper with the data sent by the UE 1 to the UE 3. Therefore, even if encryption protection is performed on the data sent by the UE 1 to the UE 2, when the UE 2 sends the data to the UE 3, the data is still leaked. As a result, data transmission security is poor. Therefore, a data security problem and a signaling security problem in an interaction process between the UE 1 and the UE 3 need to be resolved urgently. Similarly, for integrity protection, if integrity protection is performed on data sent by the UE 1 to the UE 2 through the PCS interface 1, but integrity protection is not performed on the data sent by the UE 2 to the UE 3 through the PCS interface, an attacker may use the PCS interface 2 between the UE 2 and the UE 3 to tamper with the data sent by the UE 1 to the UE 3.

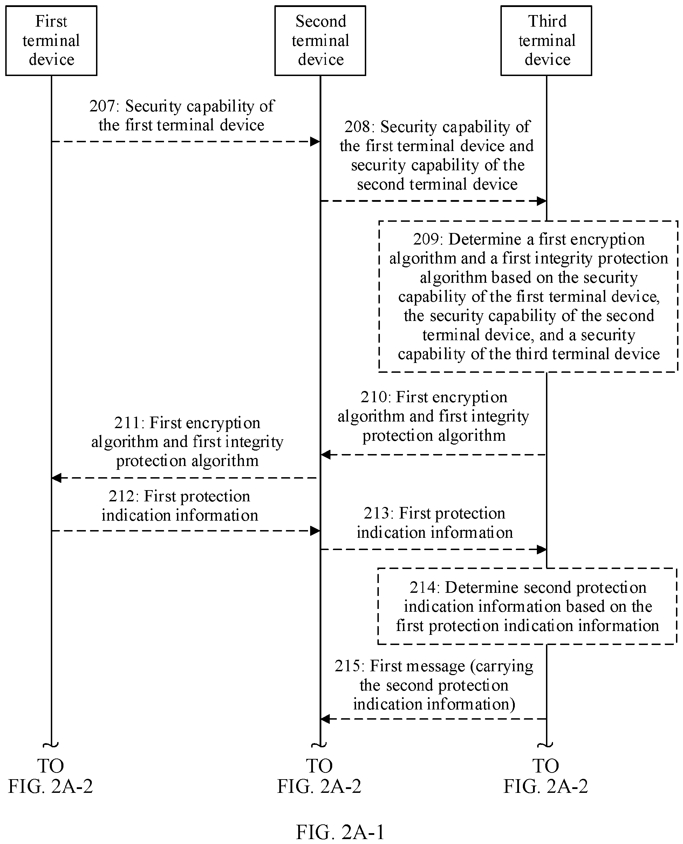

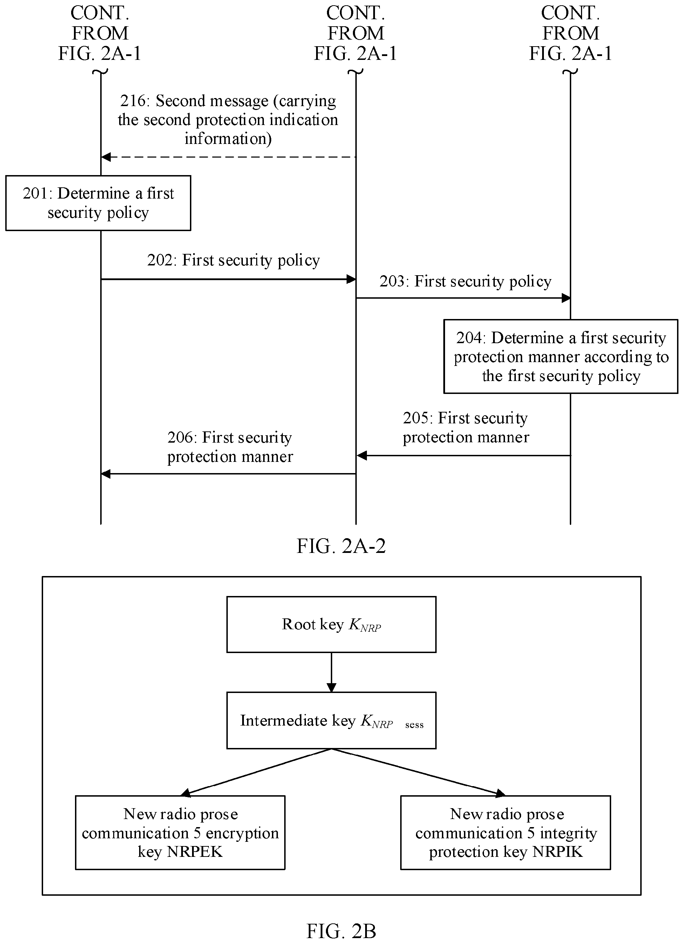

In view of this, to ensure that a security protection manner between the UE 1 and the UE 2 is consistent with a security protection manner between the UE 2 and the UE 3, embodiments of this application provide a corresponding negotiation solution for negotiating the security protection manner between the UE 1 and the UE 2 and the security protection manner between the UE 2 and the UE 3. For details, refer to the embodiment shown in FIG. 2A-1 and FIG. 2A-2 in the following description.

A proximity-based service communication application scenario shown in FIG. 1 is applicable to a long term evolution (Long Term Evolution, LTE) system, a fifth-generation (fifth-generation, 5G) mobile communication system, a mobile communication system (for example, a 6G mobile communication system) after a 5G network, a device-to-device (device-to-device, D2D) communication system, a vehicle-to-everything (vehicle-to-everything, V2X) communication system, or the like. This is not specifically limited in this application.

It should be noted that FIG. 1 is merely an application scenario shown for describing the technical solutions in embodiments of this application. In addition to the UE-to-UE relay scenario shown in FIG. 1, the technical solutions in embodiments of this application are further applicable to negotiation of a security protection manner in any other relay scenario.

In FIG. 1, the UE is a terminal device. The terminal device is a device having a wireless transceiver function, and may also be referred to as an access terminal, a terminal, a subscriber unit, a subscriber station, a mobile station, a remote station, a remote terminal, a mobile device, a user terminal, a user agent, a user apparatus, or the like. The terminal device may be deployed on land, including an indoor device, an outdoor device, a handheld device, or a vehicle-mounted device, or may be deployed on a water surface (for example, on a ship), or may be deployed in the air (for example, on aircraft, a balloon, or a satellite). The terminal device may be a cellular phone (cellular phone), a cordless phone, a session initiation protocol (session initiation protocol, SIP) phone, a smart phone (smart phone), a mobile phone (mobile phone), a wireless local loop (wireless local loop, WLL) station, a personal digital assistant (personal digital assistant, PDA), or the like. Alternatively, the terminal device may be a handheld device or a computing device that has a wireless communication function, another device connected to a wireless modem, a vehicle-mounted device, a wearable device, an uncrewed aerial vehicle device, a terminal in the internet of things or the internet of vehicles, a terminal in any form in a 5G network or a future network, relay user equipment, a terminal in a future evolved PLMN, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), or a wireless terminal in a smart home (smart home). A type or the like of the terminal device is not limited in embodiments of this application.

FIG. 2A-1 and FIG. 2A-2 are a schematic diagram of an embodiment of a communication method according to embodiments of this application. In FIG. 2A-1 and FIG. 2A-2, the method includes the following steps.

201: A first terminal device determines a first security policy corresponding to a service to be used by the first terminal device.

The first security policy includes a protection requirement of encryption protection and a protection requirement of integrity protection.

Optionally, the service to be used by the first terminal device is represented by using at least one of the following information: first service information, a first DNN, and first slice information.

The first service information is service information corresponding to the service to be used by the first terminal device. The first DNN is a DNN corresponding to the service to be used by the first terminal device. The first slice information is slice information of a slice to be accessed by the first terminal device.

Specifically, the first terminal device may determine the first security policy based on at least one of information of the first service information, the first DNN, and the first slice information. In other words, the first terminal device determines a security requirement of the first terminal device. For example, the first security policy includes that encryption protection is required, and integrity protection is preferred.

Optionally, the first security policy is a user plane (user plane, UP) security policy that is determined by the first terminal device and that corresponds to the service to be used by the first terminal device.

202: The first terminal device sends the first security policy to a second terminal device.

Optionally, the first terminal device further sends, to the second terminal device, at least one of the following information: the first service information, the first DNN, and the first slice information.

203: The second terminal device sends the first security policy to a third terminal device.

Optionally, the second terminal device further determines a second security policy based on at least one of information of the first service information, the first DNN, and the first slice information, and sends the second security policy to the third terminal device. The second security policy is a security policy that is determined by the second terminal device and that corresponds to the service to be used by the first terminal device.

The second security policy may be a UP security policy that is determined by the second terminal device and that corresponds to the service to be used by the first terminal device.

204: The third terminal device determines a first security protection manner according to the first security policy.

The following shows, by using Table 1, a plurality of possible forms of the first security protection manner determined by the third terminal device for a plurality of possible cases of encryption protection and integrity protection that are indicated by the first security policy.

**Table 1**

| First security policy | Encryption protection is required | Encryption protection is preferred | Encryption protection is not needed |
|---|---|---|---|
| Integrity protection is required | Enable encryption protection and enable integrity protection | Enable encryption protection and enable integrity protection; or disable encryption protection and enable integrity protection | Disable encryption protection and enable integrity protection |
| Integrity protection is preferred | Enable encryption protection and enable integrity protection; or enable encryption protection and disable integrity protection | Enable encryption protection and enable integrity protection; enable encryption protection and disable integrity protection; or disable encryption protection and enable integrity protection | Disable encryption protection and enable integrity protection; or disable encryption protection and disable integrity protection |
| Integrity protection is not needed | Enable encryption protection and disable integrity protection | Enable encryption protection and disable integrity protection; or disable encryption protection and disable integrity protection | Disable encryption protection and disable integrity protection |

It can be learned from the foregoing description that, for the plurality of possible cases of encryption protection and integrity protection that are indicated by the first security policy, the forms of the first security protection manner determined by the third terminal device are also different. For example, if encryption protection indicated by the first security policy is required and integrity protection is required, the first security protection manner determined by the third terminal device is enabling encryption protection and enabling integrity protection. For another example, if encryption protection indicated by the first security policy is required and integrity protection is preferred, the first security protection manner determined by the third terminal device is enabling encryption protection and enabling integrity protection, or is enabling encryption protection and disabling integrity protection.

Optionally, the third terminal device determines the first security protection manner according to the first security policy and the second security policy.

The following describes, from a perspective of encryption protection, operations performed by the third terminal device according to the first security policy and the second security policy. For a perspective of integrity protection, operations are also similar to these operations, and are not described one by one herein. During actual application, the third terminal device should determine the first security protection manner from two aspects: encryption protection and integrity protection. Refer to Table 2.

**Table 2**

| First security policy/Second security policy | Encryption protection is required | Encryption protection is preferred | Encryption protection is not needed |
|---|---|---|---|
| Encryption protection is required | Enable encryption protection | Enable encryption protection | Send a rejection message |
| Encryption protection is preferred | Enable encryption protection | Enable encryption protection or disable encryption protection | Disable encryption protection |
| Encryption protection is not needed | Send a rejection message | Disable encryption protection | Disable encryption protection |

It can be learned that, for a plurality of possible case combinations of encryption protection indicated by the first security policy and encryption protection indicated by the second security policy, encryption protection of the first security protection manner determined by the third terminal device is also different. For example, if encryption protection indicated by the first security policy is required, and encryption protection indicated by the second security policy is preferred, the third terminal device may determine that the first security protection manner is enabling encryption protection. For another example, if encryption protection indicated by the first security policy is not needed, and encryption protection indicated by the second security policy is required, it can be learned that the first security policy and the second security policy cannot agree on a security protection manner. Therefore, the third terminal device may send a rejection message to the second terminal device.

Optionally, this embodiment further includes step 204a, and step 204a is performed before step 204.

Step 204a: The third terminal device further determines a sixth security policy based on at least one of information of the received first service information, the received first DNN, and the received first slice information.

The sixth security policy is a security policy that is determined by the third terminal device and that corresponds to the service to be used by the first terminal device. Optionally, the sixth security policy is a UP security policy that is determined by the third terminal device and that corresponds to the service to be used by the first terminal device.

Based on step 204a, that the third terminal device determines a first security protection manner according to the first security policy specifically includes:
The third terminal device determines the first security protection manner according to the first security policy, the second security policy, and the sixth security policy.

A specific manner in which the third terminal device determines the first security protection manner is as follows:
The manner in which the third terminal device determines the first security protection manner is first described from a perspective of encryption protection.

If encryption protection indicated by the first security policy, encryption protection indicated by the second security policy, and encryption protection indicated by the sixth security policy are all required, the third terminal device determines to enable encryption protection.

If encryption protection indicated by the first security policy, encryption protection indicated by the second security policy, and encryption protection indicated by the sixth security policy are all preferred, the third terminal device determines to enable encryption protection or disable encryption protection.

If encryption protection indicated by the first security policy, encryption protection indicated by the second security policy, and encryption protection indicated by the sixth security policy are all not needed, the third terminal device determines to disable encryption protection.

If encryption protection indicated by the first security policy, encryption protection indicated by the second security policy, and encryption protection indicated by the sixth security policy include two types: required and preferred, the third terminal device determines to enable encryption protection.

If encryption protection indicated by the first security policy, encryption protection indicated by the second security policy, and encryption protection indicated by the sixth security policy include two types: preferred and not needed, the third terminal device determines to disable encryption protection.

It should be noted that, if encryption protection indicated by the first security policy, encryption protection indicated by the second security policy, and encryption protection indicated by the sixth security policy include two types: required and not needed, the third terminal device sends the rejection message to the second terminal device.

Integrity protection processing is similar to the foregoing encryption protection processing. Details are not described one by one again.

This application further provides another implementation: The third terminal device determines the first security protection manner according to the first security policy and a sixth security policy.

The sixth security policy is a security policy that is determined by the third terminal device and that corresponds to the service to be used by the first terminal device, and the sixth security policy is a security policy determined by the third terminal device based on at least one of information of the received first service information, the received first DNN, and the received first slice information.

Optionally, the sixth security policy is a UP security policy that is determined by the third terminal device and that corresponds to the service to be used by the first terminal device.

A process in which the third terminal device determines the first security protection manner according to the first security policy and the sixth security policy is similar to the process in which the third terminal device determines the first security protection manner according to the first security policy and the second security policy in step 204. For details, refer to the related descriptions in which the third terminal device determines the first security protection manner according to the first security policy and the second security policy. This is not limited in this application.

205: The third terminal device sends the first security protection manner to the second terminal device.

The first security protection manner is a security protection manner between the second terminal device and the third terminal device.

Optionally, the first security protection manner is a UP security protection manner between the second terminal device and the third terminal device.

206: The second terminal device sends the first security protection manner to the first terminal device.

The first security protection manner is a security protection manner between the first terminal device and the second terminal device.

Optionally, the first security protection manner is a UP security protection manner between the first terminal device and the second terminal device.

In this embodiment, on the basis that the first terminal device, the second terminal device, and the third terminal device use a hop-by-hop (hop-by-hop) protection mechanism, a negotiation solution for negotiating the security protection manner between the first terminal device and the second terminal device and the security protection manner between the second terminal device and the third terminal device is described.

Optionally, that the first terminal device, the second terminal device, and the third terminal device use a hop-by-hop (hop-by-hop) protection mechanism is pre-configured or determined through negotiation. This is not specifically limited in this application. A procedure of negotiating the protection mechanism is described below by using step 212 to step 216.

Specifically, the first terminal device performs security protection on data of the first terminal device in the first security protection manner. Then, the first terminal device sends the data of the first terminal device to the second terminal device. After receiving the data of the first terminal device, the second terminal device parses the data of the first terminal device. Then, the second terminal device performs security protection on the data of the first terminal device in the first security protection manner, and then sends the data of the first terminal device to the third terminal device.

Optionally, this embodiment further includes step 207 to step 216, and step 207 to step 216 are performed before step 201, or step 207 to step 216 are performed simultaneously with step 201 to step 205.

207: The first terminal device sends a security capability of the first terminal device to the second terminal device.

The security capability of the first terminal device includes an encryption algorithm and an integrity protection algorithm that are supported by the first terminal device.

208: The second terminal device sends the security capability of the first terminal device and a security capability of the second terminal device to the third terminal device.

The security capability of the second terminal device includes an encryption algorithm and an integrity protection algorithm that are supported by the second terminal device.

209: The third terminal device determines a first encryption algorithm and a first integrity protection algorithm based on the security capability of the first terminal device, the security capability of the second terminal device, and a security capability of the third terminal device.

Specifically, the third terminal device may select, based on the security capability of the first terminal device, the security capability of the third terminal device, and the security capability of the third terminal device, an encryption algorithm and an integrity algorithm that are supported by all of the first terminal device, the second terminal device, and the third terminal device. Then, the third terminal device selects the first encryption algorithm and the first integrity protection algorithm from the encryption algorithm and the integrity algorithm that are supported by all of the first terminal device, the second terminal device, and the third terminal device.

Optionally, the third terminal device selects, based on an algorithm priority list of the third terminal device, an encryption algorithm with a highest priority and an integrity protection algorithm with a highest priority from the encryption algorithm and the integrity algorithm that are supported by all of the first terminal device, the second terminal device, and the third terminal device. The algorithm priority list indicates a priority of an encryption algorithm supported by the third terminal device and a priority of integrity protection supported by the third terminal device.

Optionally, the third terminal device determines a security algorithm based on the first security protection manner. If the first security protection manner indicates that encryption protection does not need to be performed, the third terminal device sets the first encryption algorithm to a null algorithm; or if the first security protection manner indicates that integrity protection does not need to be performed, the third terminal device sets the first integrity protection algorithm to a null algorithm.

210: The third terminal device sends the first encryption algorithm and the first integrity protection algorithm to the second terminal device.

The first encryption algorithm is an encryption algorithm that may be used for signaling communication or data communication between the second terminal device and the third terminal device. The first integrity protection algorithm is an integrity protection algorithm that may be used for signaling communication or data communication between the second terminal device and the third terminal device.

211: The second terminal device sends the first encryption algorithm and the first integrity protection algorithm to the first terminal device.

The first encryption algorithm is an encryption algorithm that may be used for signaling communication or data communication between the first terminal device and the second terminal device. The first integrity protection algorithm is an integrity protection algorithm that may be used for signaling communication or data communication between the first terminal device and the second terminal device.

Optionally, the first terminal device determines, based on the first security protection manner, to encrypt the data or signaling of the first terminal device by using the first encryption algorithm; and/or the first terminal device determines, based on the first security protection manner, to perform integrity protection on the data or signaling of the first terminal device by using the first integrity algorithm.

Specifically, the first terminal device determines, based on the first security protection manner, whether to enable encryption protection and whether to enable integrity protection. If the first security protection manner includes enabling encryption protection and enabling integrity protection, the first terminal device encrypts the data or the signaling of the first terminal device by using the first encryption algorithm, and performs integrity protection on the data or the signaling of the first terminal device by using the first integrity protection algorithm. Then, the first terminal device sends the data or the signaling of the first terminal device to the second terminal device. After receiving the data or the signaling of the first terminal device, the second terminal device parses the data or the signaling of the first terminal device. Then, the second terminal device encrypts the data or the signaling of the first terminal device by using the first encryption algorithm, performs integrity protection on the data or the signaling of the first terminal device by using the first integrity protection algorithm, and then sends the data or the signaling of the first terminal device to the third terminal device.

Optionally, step 212 to step 216 show a procedure of negotiating second protection indication information, and step 207 to step 211 show a procedure of negotiating the first encryption algorithm and the first integrity protection algorithm. Step 212 to step 216 may be performed before the execution process of step 207 to step 211, or step 212 to step 216 may be performed simultaneously with step 207 to step 211. For example, in step 207, the security capability of the first terminal device and first protection indication information in step 212 may be simultaneously sent by using a same message, and step 208 is similar to this. In step 208, the security capability of the first terminal device, the security capability of the second terminal device, and the first encryption algorithm and the first integrity protection algorithm that are in step 210 may be simultaneously sent by using a same message. Step 209, step 210, and step 211 are similar to this, and are not described one by one herein.

212: The first terminal device sends the first protection indication information to the second terminal device.

The first protection indication information indicates a protection mechanism between the first terminal device and the third terminal device. For example, the first protection indication information indicates an end-to-end (end-to-end, E2E) protection mechanism or a hop-by-hop protection mechanism.

Specifically, the first terminal device indicates, by using the first protection indication information, a protection mechanism that the first terminal device expects to perform.

213: The second terminal device sends the first protection indication information to the third terminal device.

214: The third terminal device determines the second protection indication information based on the first protection indication information.

The second protection indication information indicates the protection mechanism between the first terminal device and the third terminal device. Because this embodiment is based on the hop-by-hop protection mechanism, the second protection indication information should indicate the hop-by-hop protection mechanism.

Optionally, the third terminal device determines the second protection indication information in a plurality of manners.

Implementation 1: The third terminal device determines a protection mechanism indicated by the first protection indication information; and then, the third terminal device generates second protection indication information.

A protection mechanism indicated by the second protection indication information is the same as the protection mechanism indicated by the first protection indication information. In the implementation 1, the first protection indication information indicates a hop-by-hop protection mechanism, and therefore, the second protection indication information indicates the hop-by-hop protection mechanism.

Implementation 2: The third terminal device compares a protection mechanism that the third terminal device prefers to perform with a protection mechanism indicated by the first protection indication information. If the protection mechanisms are consistent, the third terminal device generates second protection indication information.

In the implementation 2, the first protection indication information indicates a hop-by-hop protection mechanism, and the protection mechanism that the third terminal device prefers to perform is the hop-by-hop protection mechanism.

In this embodiment, in the implementation 2, if the protection mechanism that the third terminal device prefers to perform is inconsistent with the protection mechanism indicated by the first protection indication information, the third terminal device may send a rejection message to the second terminal device, and then the second terminal device sends the rejection message to the first terminal device. The rejection message is used to reject to establish a connection via the second terminal device. For example, the first protection indication information indicates the end-to-end protection mechanism, and the third terminal device prefers to perform the hop-by-hop protection mechanism. Optionally, the rejection message indicates that the protection mechanism indicated by the first terminal device is inconsistent with the protection mechanism that the third terminal device prefers to perform.

It should be noted that if the third terminal device does not receive the first protection indication information, the third terminal device determines a local security policy corresponding to the service to be used by the first terminal device. Then, the third terminal device determines the second protection indication information according to the local security policy.

215: The third terminal device sends a first message to the second terminal device.

The first message carries the second protection indication information.

Specifically, the third terminal device sends the second protection indication information to the second terminal device by using the first message, to notify the second terminal device of the protection mechanism indicated by the second protection indication information.

In this embodiment, the second protection indication information indicates the hop-by-hop protection mechanism. Optionally, this embodiment further includes step 215a.

Step 215a: The third terminal device performs integrity protection on the first message by using a first shared key and the first integrity protection algorithm.

The first shared key is a shared key between the second terminal device and the third terminal device.

Specifically, the third terminal device generates the first shared key. Because the second protection indication information indicates the hop-by-hop protection mechanism, the third terminal device may perform integrity protection on the first message by using the first shared key and the first integrity protection algorithm.

Optionally, a process in which the third terminal device generates the first shared key may be as follows: As shown in FIG. 2B, the third terminal device determines a root key *K_{NRP}*, and the third terminal device derives an intermediate key *K_{NRP-sess}* based on the root key. Then, the third terminal device derives a new radio prose communication 5 encryption key (new radio prose communication 5 encryption key, NRPEK) and a new radio prose communication 5 integrity protection key (new radio prose communication 5 integrity key, NRPIK) based on the first intermediate key *K_{NRP-sess}.* The first shared key is the integrity protection key NRPIK.

The third terminal device determines the root key *K_{NRP}* in a plurality of manners. The following shows two possible implementations.
1. The third terminal device determines the root key *K_{NRP}* based on a key identifier sent by the second terminal device.
2. The second terminal device and the third terminal device agree on the root key *K_{NRP}* through negotiation in an authentication process.

216: The second terminal device sends the first message to the first terminal device.

Specifically, the second terminal device sends a second message to the first terminal device, where the second message carries content of the first message, to notify the first terminal device of the protection mechanism indicated by the second protection indication information.

Optionally, based on step 215a, step 216 specifically includes step 216a to step 216d.

Step 216a: The second terminal device receives the first message sent by the third terminal device.

Integrity protection is performed on the first message by using the first shared key and the first integrity protection algorithm.

Step 216b: The second terminal device performs integrity verification on the first message by using the first shared key and the first integrity protection algorithm.

For example, the first message carries a security capability of the first terminal device. The second terminal device verifies whether the security capability of the first terminal device is consistent with the security capability that is of the first terminal device and that is sent by the second terminal device in the process of step 208. If the security capabilities are consistent, the second terminal device determines that the verification succeeds. That the second terminal device verifies the security capability of the first terminal device may be used by the second terminal device to determine that the security capability that is of the first terminal device and that is received by the second terminal device from the first terminal device and the security capability that is of the first terminal device and that is sent by the second terminal device to the third terminal device in step 208 are not tampered with. If the security capability of the first terminal device is tampered with and is not discovered, subsequently, there may be an attack of modifying an encryption algorithm and/or an integrity algorithm that are/is determined based on the security capability of the first terminal device and the security capability of the second terminal device.

Step 216c: When the verification succeeds, the second terminal device generates the second message, and performs integrity protection on the second message by using a second shared key and the first integrity protection algorithm.

The second shared key is a shared key between the first terminal device and the second terminal device. The second message carries the second protection indication information. A manner of generating the second shared key is similar to the manner in which the third terminal device generates the first shared key. For details, refer to the related descriptions. Details are not described herein again.

It should be noted that, when the verification fails, the second terminal device may feed back a rejection message to the third terminal device.

Step 216d: The second terminal device sends the second message to the first terminal device.

Optionally, based on step 216a to step 216d, this embodiment further includes step 216e to step 216g.

Step 216e: The first terminal device receives the second message.

Step 216f: The first terminal device performs integrity verification on the second message by using the second shared key and the first integrity protection algorithm. The second message carries the second protection indication information.

Step 216f is similar to step 216b. For details, refer to the related descriptions of step 216b. Details are not described herein again.

Step 216g: When the verification succeeds, the first terminal device determines the hop-by-hop protection mechanism indicated by the second protection indication information.

It should be noted that, when the verification fails, the first terminal device may feed back a rejection message to the second terminal device, and then the second terminal device feeds back the rejection message to the third terminal device.

Optionally, the security protection and verification manner for the second protection indication information in step 215 is also applicable to integrity protection and verification for the first encryption algorithm and the first integrity protection algorithm in step 210 and step 210. In addition, security protection for the first encryption algorithm and the first integrity protection algorithm, and security protection for the second protection indication information may be performed simultaneously or separately. This is not limited in this application.

In this embodiment of this application, the first terminal device determines the first security policy corresponding to the service to be used by the first terminal device; then, the first terminal device sends the first security policy to the second terminal device; the second terminal device receives the first security policy, and sends the first security policy to the third terminal device; then, the third terminal device determines the first security protection manner according to the first security policy; the third terminal device sends the first security protection manner to the second terminal device, where the first security protection manner is a security protection manner between the second terminal device and the third terminal device; and the second terminal device receives the first security protection manner, and sends the first security protection manner to the first terminal device, where the first security protection manner is a security protection manner between the first terminal device and the second terminal device. It can be learned that, in the technical solution in this embodiment of this application, the third terminal device determines the first security protection manner according to the first security policy, and then sends the first security protection manner to the second terminal device. Then, the second terminal device receives the first security protection manner, and sends the first security protection manner to the first terminal device, to implement negotiation consistency between the security protection manner between the first terminal device and the second terminal device and the security protection manner between the second terminal device and the third terminal device, and improve security of transmitting signaling and data between the first terminal device and the third terminal device.

Embodiments of this application further provide another embodiment. This embodiment is similar to the embodiment shown in FIG. 2A-1 and FIG. 2A-2, and a difference lies in step 208 and step 209.

Step 208 may be replaced with the following: The second terminal device sends, to the third terminal device, an encryption algorithm and an integrity protection algorithm that are supported by both the first terminal device and the second terminal device.

Specifically, the second terminal device determines, based on the security capability of the first terminal device and the security capability of the second terminal device, the encryption algorithm and the integrity protection algorithm that are supported by both the first terminal device and the second terminal device. Then, the second terminal device sends, to the third terminal device, the encryption algorithm and the integrity protection algorithm that are supported by both the first terminal device and the second terminal device.

Optionally, the encryption algorithm supported by both the first terminal device and the second terminal device is represented in a form of an encryption algorithm list. The integrity protection algorithm supported by both the first terminal device and the second terminal device is represented in a form of an integrity protection algorithm list. In other words, the second terminal device sends the encryption algorithm list and the integrity protection algorithm list to the third terminal device.

Step 209 may be replaced with the following: The third terminal device determines the first encryption algorithm and the first integrity protection algorithm based on the encryption algorithm and the integrity protection algorithm that are supported by both the first terminal device and the second terminal device and an encryption algorithm and an integrity protection algorithm that are supported by the third terminal device.

Optionally, the third terminal device determines the first encryption algorithm and the first integrity protection algorithm based on an algorithm priority list of the third terminal device and the encryption algorithm and the integrity protection algorithm that are supported by both the first terminal device and the second terminal device. In other words, the first encryption algorithm is an encryption algorithm that is supported by all of the first terminal device, the second terminal device, and the third terminal device and that has a highest priority, and the first integrity protection algorithm is an integrity protection algorithm that is supported by all of the first terminal device, the second terminal device, and the third terminal device and that has a highest priority.

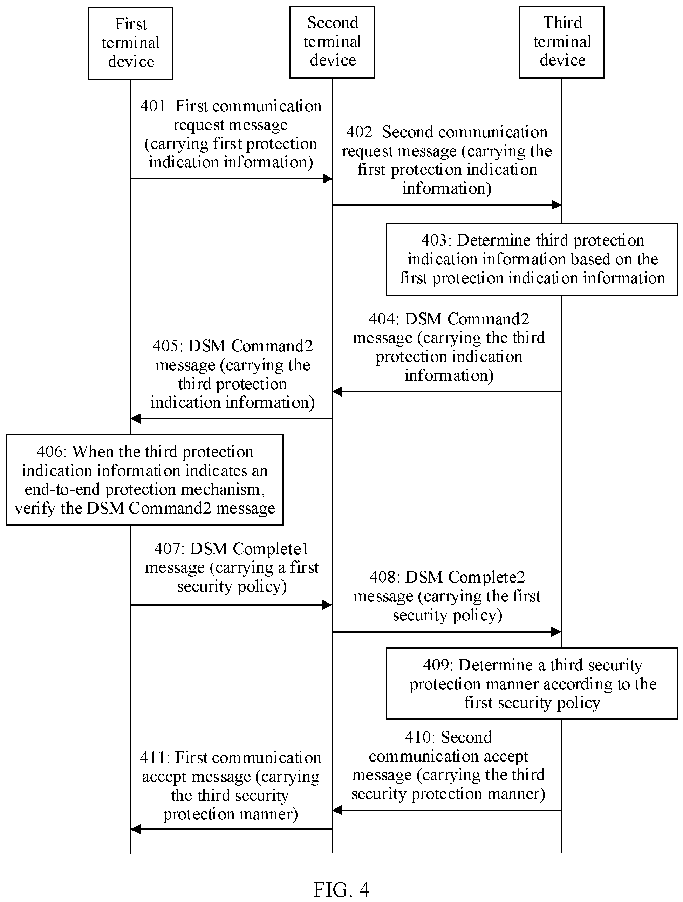

FIG. 2A-1 and FIG. 2A-2 show a process of negotiating the security protection manner between the first terminal device and the second terminal device and the security protection manner between the second terminal device and the third terminal device in the hop-by-hop protection mechanism. For the end-to-end protection mechanism, a process of negotiating a security protection manner between the first terminal device and the third terminal device is also similar, and is specifically described in the subsequent embodiment shown in FIG. 4.

The embodiment shown in FIG. 2A-1 and FIG. 2A-2 may be executed in an existing interaction procedure between the first terminal device and the third terminal device. To be specific, in the existing interaction procedure between the first terminal device and the third terminal device, negotiation consistency between the security protection manner between the first terminal device and the second terminal device and the security protection manner between the second terminal device and the third terminal device is implemented.

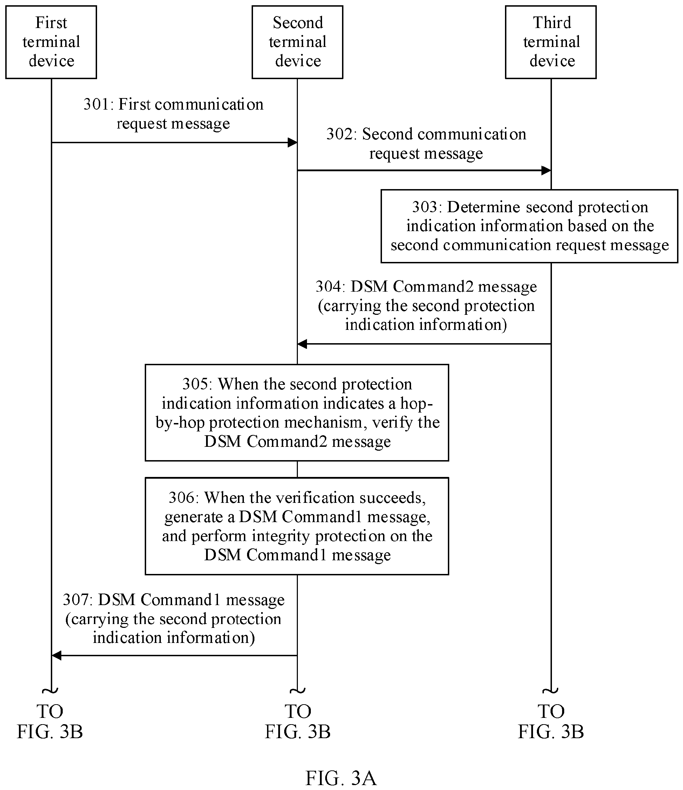

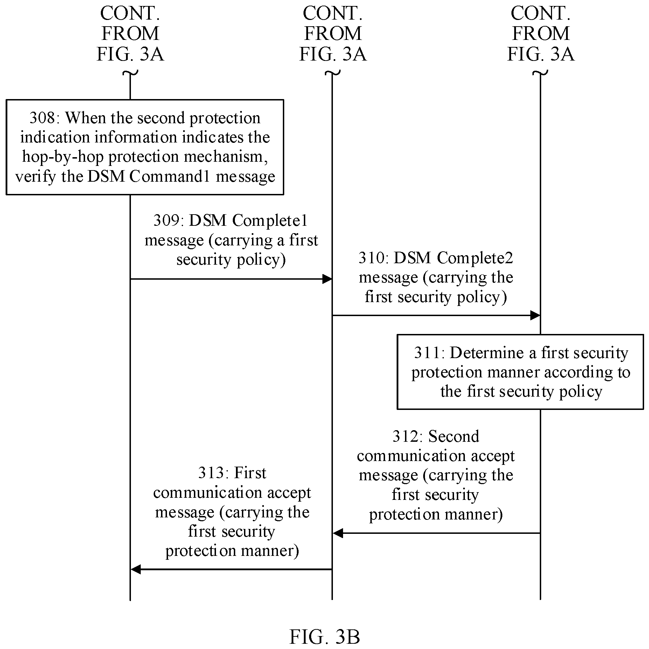

The following provides descriptions with reference to an embodiment shown in FIG. 3A and FIG. 3B. The embodiment shown in FIG. 3A and FIG. 3B is negotiation of a security protection manner between a first terminal device and a second terminal device and a security protection manner between the second terminal device and a third terminal device in a hop-by-hop protection mechanism.

FIG. 3A and FIG. 3B are a schematic diagram of another embodiment of a communication method according to embodiments of this application. In FIG. 3A and FIG. 3B, the method includes the following steps.

301: A first terminal device sends a first communication request (communication request) message to a second terminal device.

The first communication request message carries at least one of the following information:
first protection indication information, first service information, a third security policy, a security capability of the first terminal device, and a relay indicator (indicator).

The third security policy is a control plane (control panel, CP) security policy that is determined by the first terminal device and that corresponds to a service to be used by the first terminal device. The relay indicator indicates that the second terminal device serves as a UE relay to forward data, or indicates that the communication request message is a message sent to the UE relay. For the first service information, the first protection indication information, and the security capability of the first terminal device, refer to the related descriptions in the embodiment shown in FIG. 2A-1 and FIG. 2A-2. Details are not described herein again.

Before step 301, the first terminal device and a third terminal device are configured to be able to implement communication with a network via the UE relay, and the second terminal device is configured to be able to play a role of the UE relay. A specific configuration manner is not limited in this application. The first terminal device and the third terminal device discover the UE relay. A specific discovery mechanism is not limited.

Optionally, the first terminal device may discover the UE relay in the following manner.
1. The first terminal device may receive a broadcast message sent by the second terminal device, and determine that the second terminal device serves as the UE relay.
2. The first terminal device sends a request message. Then, the second terminal device sends a response message to the first terminal device for the request message, where the request message indicates that the first terminal device requires a UE-to-UE relay, or the request message is used to request a service.

The following shows a possible configuration manner: In a registration procedure of the first terminal device, the first terminal device obtains first configuration information from a PCF network element (or may be a unified data management (unified data management, UDM) network element, a unified data repository (unified data repository, UDR) network element, or a network device such as a key management entity or a prose function). The first configuration information includes a capability that the first terminal device can use the UE relay. A configuration process of the third terminal device is also similar, and is not described one by one again. In a registration procedure of the second terminal device, the second terminal device obtains second configuration information from a PCF network element (or may be a UDM network element, a UDR network element, or a network device such as a key management entity or a proximity-based service function (proximity-based service function, prose function)). The second configuration information includes a capability that the second terminal device can perform a function of the UE relay.

The following describes a configuration process by using a process in which the first terminal device obtains the first configuration information and using the PCF network element as an example. The PCF network element sends the first configuration information to an AMF network element, and then the AMF network element sends the first configuration information to the first terminal device by using a NAS message. The first configuration information includes the capability that the first terminal device can use the UE relay.

302: The second terminal device sends a second communication request (communication request) message to the third terminal device.

The second communication request message carries content carried in the first communication request message. To be specific, the second communication request message carries at least one of the following information: the first protection indication information, the first service information, the third security policy, the security capability of the first terminal device, and the relay indicator (indicator).

Optionally, the second communication request message further carries a security capability of the second terminal device. Alternatively, the second communication request message further carries an encryption algorithm and an integrity protection algorithm that are supported by both the first terminal device and the second terminal device.

Specifically, the second terminal device determines, based on the security capability of the first terminal device and the security capability of the second terminal device, the encryption algorithm and the integrity protection algorithm that are supported by both the first terminal device and the second terminal device, and includes, in the second communication request message, the encryption algorithm and the integrity protection algorithm that are supported by both the first terminal device and the second terminal device.

In this embodiment, the encryption algorithm supported by both the first terminal device and the second terminal device may be represented in a form of an encryption algorithm list, and the integrity protection algorithm supported by both the first terminal device and the second terminal device may be represented in a form of an integrity protection algorithm list.

It should be noted that, alternatively, the second terminal device may separately send, to the third terminal device, the security capability of the second terminal device or the encryption algorithm and the integrity protection algorithm that are supported by both the first terminal device and the second terminal device. This is not specifically limited in this application.

303: Optionally, the third terminal device determines second protection indication information based on the second communication request message.

A manner in which the third terminal device determines the second protection indication information is similar to the manner in which the third terminal device determines the second protection indication information in step 214 in the embodiment shown in FIG. 2A-1 and FIG. 2A-2. For details, refer to the related descriptions of step 214 in the embodiment shown in FIG. 2A-1 and FIG. 2A-2. Details are not described herein again.

It should be noted that step 303 is optional. A protection mechanism between the first terminal device and the third terminal device may be a hop-by-hop protection mechanism by default, and may be specifically pre-configured or specified in a communication protocol.

Optionally, the third terminal device may further perform the following operations.
I. The third terminal device determines a second security protection manner according to the third security policy.

Optionally, the third terminal device determines the second security protection manner according to the third security policy and a fourth security policy.

The fourth security policy is a CP security policy that is determined by the third terminal device and that corresponds to the service to be used by the first terminal device. The second security protection manner is a CP security protection manner between the second terminal device and the third terminal device.

The following describes a process in which the third terminal device determines the second security protection manner for a plurality of possible cases of the third security policy and the fourth security policy. For ease of description, the following provides descriptions from a perspective of encryption protection and a perspective of integrity protection.
1. If both encryption protection indicated by the third security policy and encryption protection indicated by the fourth security policy are preferred, the third terminal device determines whether to enable encryption protection. For example, the second security protection manner includes enabling encryption protection or disabling encryption protection.
2. If both integrity protection indicated by the third security policy and integrity protection indicated by the fourth security policy are preferred, the third terminal device determines whether to enable integrity protection. For example, the second security protection manner includes enabling integrity protection or disabling integrity protection.
3. If encryption protection indicated by the third security policy is required and encryption protection indicated by the fourth security policy is preferred, or if encryption protection indicated by the third security policy is preferred and encryption protection indicated by the fourth security policy is required, the third terminal device determines to enable encryption protection. For example, the second security protection manner includes enabling encryption protection.
4. If integrity protection indicated by the third security policy is required and integrity protection indicated by the fourth security policy is preferred, or if integrity protection indicated by the third security policy is preferred and integrity protection indicated by the fourth security policy is required, the third terminal device determines to enable integrity protection. In other words, the second security protection manner includes enabling integrity protection.
5. If encryption protection indicated by the third security policy is preferred and encryption protection indicated by the fourth security policy is not needed, or if encryption protection indicated by the third security policy is not needed and encryption protection indicated by the fourth security policy is preferred, the third terminal device determines to disable encryption protection. For example, the second security protection manner includes disabling encryption protection.
6. If integrity protection indicated by the third security policy is preferred and integrity protection indicated by the fourth security policy is not needed, or if integrity protection indicated by the third security policy is not needed and integrity protection indicated by the fourth security policy is preferred, the third terminal device determines to disable integrity protection. For example, the second security protection manner includes disabling integrity protection.
7. If integrity protection indicated by the third security policy is required and integrity protection indicated by the fourth security policy is not needed, or if integrity protection indicated by the third security policy is not needed and integrity protection indicated by the fourth security policy is required, the third terminal device determines that security protection manners are inconsistent and needs to reject establishment of communication. In addition, the third terminal device sends a rejection message to the second terminal device, and the second terminal device sends the rejection message to the first terminal device.

Optionally, the second communication request message further carries a fifth security policy. The fifth security policy is a CP security policy that is determined by the second terminal device and that corresponds to the service to be used by the first terminal device.

In this case, that the third terminal device determines the second security protection manner according to the third security policy and a fourth security policy specifically includes:

The third terminal device determines the second security protection manner according to the third security policy, the fourth security policy, and the fifth security policy. In this manner, that the third terminal device determines the second security protection manner is similar to that the third terminal device determines the second security protection manner according to the third security policy and the fourth security policy. For details, refer to the foregoing descriptions. Details are not described herein again.

II. The third terminal device determines a CP encryption algorithm and a CP integrity protection algorithm.

The CP encryption algorithm may be an encryption algorithm used during signaling communication between the first terminal device and the third terminal device, and the CP integrity protection algorithm may be an integrity protection algorithm used during signaling communication between the first terminal device and the third terminal device.

For example, the first terminal device, the second terminal device, and the third terminal device determine the second security protection manner as a CP security protection manner through negotiation. If the first terminal device determines, based on the CP security protection manner, to enable encryption protection and enable integrity protection, the first terminal device may perform security protection on signaling of the first terminal device by using the CP encryption algorithm and the CP integrity protection algorithm, and then send the signaling of the first terminal device to the second terminal device. The second terminal device parses the signaling of the first terminal device. In addition, the second terminal device also performs security protection on the signaling of the first terminal device by using the CP encryption algorithm and the CP integrity protection algorithm, and then sends the signaling of the first terminal device to the third terminal device. The signaling of the first terminal device should be signaling that is between the first terminal device and the third terminal device and that corresponds to the first service information.

Optionally, the CP encryption algorithm may alternatively be used as a UP encryption algorithm used during data communication between the first terminal device and the third terminal device, and the CP integrity protection algorithm may alternatively be a UP integrity protection algorithm used during data communication between the first terminal device and the third terminal device.

The following shows several possible implementations in which the second terminal device determines the CP encryption algorithm and the CP integrity protection algorithm.
1. The third terminal device determines, based on the security capability of the first terminal device and the security capability of the second terminal device, an encryption algorithm and an integrity protection algorithm that are also supported by the third terminal device, uses the encryption algorithm as the CP encryption algorithm, and uses the integrity protection algorithm as the CP integrity protection algorithm.
   Specifically, the second communication request message carries the security capability of the first terminal device and the security capability of the second terminal device, and the third terminal device obtains the security capability of the first terminal device and the security capability of the second terminal device from the second communication request message.
2. The third terminal device determines, based on the encryption algorithm and the integrity protection algorithm that are supported by both the first terminal device and the second terminal device, an encryption algorithm and an integrity protection algorithm that are also supported by the third terminal device, uses the encryption algorithm as the CP encryption algorithm, and uses the integrity protection algorithm as the CP integrity protection algorithm.

Specifically, the second communication request message carries the encryption algorithm and the integrity protection algorithm that are supported by both the first terminal device and the second terminal device, and the third terminal device obtains, from the second communication request message, the encryption algorithm and the integrity protection algorithm that are supported by both the first terminal device and the second terminal device.

3. The third terminal device determines, based on the security capability of the first terminal device, the security capability of the second terminal device, and an algorithm priority list of the third terminal device, an encryption algorithm and an integrity protection algorithm that are also supported by the third terminal device, uses the encryption algorithm as the CP encryption algorithm, and uses the integrity protection algorithm as the CP integrity protection algorithm.

The algorithm priority list indicates a priority of the encryption algorithm supported by the third terminal device and a priority of the integrity protection algorithm supported by the third terminal device.

4. The third terminal device determines, based on an algorithm priority list of the third terminal device and the encryption algorithm and the integrity protection algorithm that are supported by both the first terminal device and the second terminal device, an encryption algorithm and an integrity protection algorithm that are also supported by the third terminal device, uses the encryption algorithm as the CP encryption algorithm, and uses the integrity protection algorithm as the CP integrity protection algorithm.

It should be noted that if the second security protection manner determined by the third terminal device indicates to disable encryption protection, the CP encryption algorithm is a null algorithm; or if the second security protection manner determined by the third terminal device indicates to disable integrity protection, the CP integrity protection algorithm is a null algorithm.

It should be noted that, if the third terminal device discovers no encryption algorithm and/or integrity protection algorithm that are/is supported by all of the first terminal device, the second terminal device, and the third terminal device, the third terminal device rejects establishment of a connection, and sends a rejection message to the second terminal device, and the second terminal device sends the rejection message to the first terminal device. If there is no encryption algorithm and/or integrity protection algorithm that are/is supported by all of the first terminal device, the second terminal device, and the third terminal device, it means that a PCS interface between the first terminal device and the second terminal device and a PCS interface between the second terminal device and the third terminal device cannot agree on a same encryption algorithm and/or integrity protection algorithm for security protection.

304: The third terminal device sends a direct security mode command (direct security mode command2, DSM Command2) message to the second terminal device.

The DSM Command2 message carries a CP integrity protection algorithm and a CP encryption algorithm.

Optionally, the DSM Command2 message carries the second protection indication information, and the second protection indication information indicates a protection mechanism between the first terminal device and the third terminal device. In this embodiment, the protection mechanism indicated by the second protection indication information is a hop-by-hop protection mechanism.

Optionally, the DSM Command2 message further carries at least one of the following: a security capability of the second terminal device, a security capability of the first terminal device, and first protection indication information. When the protection mechanism indicated by the second protection indication information is the hop-by-hop protection mechanism, the second terminal device may perform integrity protection on the DSM Command2 message and the CP integrity protection algorithm by using a first shared key. The first shared key is a shared key between the second terminal device and the third terminal device.

The first shared key is similar to the first shared key in step 215a in the embodiment shown in FIG. 2A-1 and FIG. 2A-2. For details, refer to the related descriptions of the first shared key in step 215a in the embodiment shown in FIG. 2A-1 and FIG. 2A-2. Details are not described herein again.

305: The second terminal device verifies the DSM Command2 message, and if the verification succeeds, performs step 306.

The DSM Command2 message carries the first protection indication information. The second terminal device may verify whether the first protection indication information carried in the DSM Command2 message is the same as the first protection indication information carried in the second communication request message in step 302. If the first protection indication information is the same, the second terminal device determines that the verification succeeds.

It should be noted that, if the verification fails, the first terminal device sends a rejection message to the second terminal device, and discards the DSM Command2 message.

If the second terminal device determines that the second protection indication information indicates the hop-by-hop protection mechanism, the second terminal device may verify the DSM Command2 message by using the first shared key and the first integrity protection algorithm, and if the verification succeeds, perform step 306.

Specifically, the DSM Command2 message carries the security capability of the second terminal device. The second terminal device may verify whether the security capability that is of the second terminal device and that is carried in the DSM Command2 message is the same as the security capability of the second terminal device. If the security capabilities are the same, the second terminal device determines that the verification succeeds; or if the security capabilities are different, the second terminal device determines that the verification fails. Alternatively, the DSM Command2 message carries a security capability of the first terminal device. The second terminal device may verify whether the security capability that is of the first terminal device and that is carried in the DSM Command2 message is the same as the security capability of the first terminal device. If the security capabilities are the same, the second terminal device determines that the verification succeeds; or if the security capabilities are different, the second terminal device determines that the verification fails.

It should be noted that, if the verification fails, the second terminal device sends a rejection message to the third terminal device, and discards the DSM Command2 message. Optionally, the second terminal device also sends a rejection message to the first terminal device, to suspend establishment of a connection between the first terminal device and the third terminal device. The rejection message further carries a failure indication, and the failure indication indicates specific content that fails to pass the verification. For example, the security capability of the first terminal device fails to pass the verification, or the security capability of the second terminal device fails to pass the verification.

306: When the verification succeeds, the second terminal device generates a DSM Command1 message, and performs integrity protection on the DSM Command1 message.

The DSM Command1 message carries the CP integrity protection algorithm and the CP encryption algorithm.

Optionally, the DSM Command1 message carries the second protection indication information.

Optionally, the DSM Command1 message further carries at least one of the following information: a security capability of the first terminal device.

Specifically, when a protection mechanism indicated by the second protection indication information is a hop-by-hop protection mechanism, the second terminal device performs integrity protection on the DSM Command1 message by using a second shared key and the CP integrity protection algorithm. The second shared key is a shared key between the first terminal device and the second terminal device. A process of generating the second shared key is similar to the process of generating the first shared key. For details, refer to the related descriptions of step 215a in the embodiment shown in FIG. 2A-1 and FIG. 2A-2. Details are not described herein again.

In this embodiment, the CP encryption algorithm and the CP integrity protection algorithm may be understood as the first encryption algorithm and the first integrity protection algorithm that are determined in step 209 in the embodiment shown in FIG. 2A-1 and FIG. 2A-2.

Optionally, an application scenario of the CP encryption algorithm and the CP integrity protection algorithm is not limited herein, and may also be used for user plane security protection. In this case, the UP encryption algorithm and the UP integrity protection algorithm are the same as the CP encryption algorithm and the CP integrity protection algorithm.

307: The second terminal device sends the DSM Command1 message to the first terminal device.

The DSM Command1 message carries the CP integrity protection algorithm and the CP encryption algorithm.

Optionally, the DSM Command1 message carries the second protection indication information.

Optionally, the DSM Command1 message further carries at least one of the following information: the security capability of the first terminal device.

308: Optionally, when the second protection indication information indicates the hop-by-hop protection mechanism, the first terminal device verifies the DSM Command1 message, and when the verification succeeds, the first terminal device performs step 309.

Specifically, the first terminal device verifies the DSM Command1 message by using the second shared key and the CP integrity protection algorithm. When the verification succeeds, the first terminal device performs step 309.

The following shows two possible verification manners. It should be noted that the verification manner is not limited in this embodiment of this application.

1. The DSM Command1 message carries the security capability of the first terminal device. The first terminal device verifies whether the security capability that is of the first terminal device and that is carried in the DSM Command1 message is the same as the security capability of the first terminal device. If the security capabilities are the same, the first terminal device determines that the verification succeeds.

2. The DSM Command1 message carries first protection indication information. The first terminal device may verify whether the first protection indication information carried in the DSM Command1 message is the same as the first protection indication information carried in the first communication request message in step 301. If the first protection indication information is the same, the first terminal device determines that the verification succeeds.

It should be noted that, if the verification fails, the first terminal device sends a rejection message to the second terminal device, and discards the DSM Command1 message.

Optionally, the rejection message further carries a failure indication, and the failure indication indicates a specific reason why the verification fails. For example, the security capability of the first terminal device fails to pass the verification.

309: The first terminal device sends a direct security mode complete (direct security mode complete1, DSM Completel) message to the second terminal device.

The DSM Complete1 message carries a first security policy. For related descriptions of the first security policy, refer to the related descriptions of step 201 in the embodiment shown in FIG. 2A-1 and FIG. 2A-2. Details are not described herein again.

Optionally, the first terminal device performs integrity protection on the DSM Complete1 message by using the second shared key and the CP integrity protection algorithm.

310: The second terminal device sends a DSM Complete2 message to the third terminal device.

The DSM Complete2 message carries a first security policy. Optionally, the DSM Complete2 message further carries a second security policy. For related descriptions of the second security policy, refer to the related descriptions of the second security policy in step 201 in the embodiment shown in FIG. 2A-1 and FIG. 2A-2. Details are not described herein again.

Specifically, after receiving the DSM Completel message, the second terminal device determines that the second protection indication information carried in the DSM Completel message indicates a hop-by-hop protection mechanism. Then, the second terminal device performs integrity verification on the DSM Complete1 message by using the second shared key and the CP integrity protection algorithm. When the verification succeeds, the second terminal device generates the DSM Complete2 message, and performs integrity protection on the DSM Complete2 message by using the first shared key and the CP integrity protection algorithm. The DSM Complete2 message carries the first security policy.

311: The third terminal device determines a first security protection manner according to the first security policy.

Step 311 is similar to step 204 in the embodiment shown in FIG. 2A-1 and FIG. 2A-2. For details, refer to the related descriptions of step 204 in the embodiment shown in FIG. 2A-1 and FIG. 2A-2. Details are not described herein again.

312: The third terminal device sends a second communication accept (communication accept) message to the second terminal device.

The second communication accept message carries the first security protection manner. The first security protection manner is a UP security protection manner between the second terminal device and the third terminal device.

Optionally, the third terminal device may further determine a UP encryption algorithm and a UP integrity protection algorithm, and send the UP encryption algorithm and the UP integrity protection algorithm to the second terminal device by using the second communication accept message. The UP encryption algorithm may be used for data communication between the third terminal device and the second terminal device, and the UP integrity protection algorithm may be used for data communication between the first terminal device and the second terminal device. In other words, the UP encryption algorithm may be different from the CP encryption algorithm in step 303, and the UP integrity protection algorithm may be different from the CP integrity protection algorithm in step 303.

313: The second terminal device sends a first communication accept (communication accept) message to the first terminal device.

The first communication accept message carries the first security protection manner, and the first security protection manner is a UP security protection manner between the first terminal device and the second terminal device.

Optionally, the first communication accept message further carries a UP encryption algorithm and a UP integrity protection algorithm.

For example, the first terminal device, the second terminal device, and the third terminal device determine the first security protection manner as a UP security protection manner through negotiation. If the first terminal device determines, based on the first security protection manner, to enable encryption protection and enable integrity protection, the first terminal device may perform security protection on data of the first terminal device by using the UP encryption algorithm and the UP integrity protection algorithm, and then send the data of the first terminal device to the second terminal device. The second terminal device parses the data of the first terminal device. In addition, the second terminal device also performs security protection on the data of the first terminal device by using the UP encryption algorithm and the UP integrity protection algorithm, and then sends the data of the first terminal device to the third terminal device. The data of the first terminal device should be data that is between the first terminal device and the third terminal device and that corresponds to the first service information.

In this embodiment of this application, the third terminal device determines the first security protection manner according to the first security policy, and then sends the first security protection manner to the second terminal device. Then, the second terminal device receives the first security protection manner, and sends the first security protection manner to the first terminal device, to implement negotiation consistency between the security protection manner between the first terminal device and the second terminal device and the security protection manner between the second terminal device and the third terminal device, and improve security of transmitting signaling and data between the first terminal device and the third terminal device. In addition, the first terminal device sends the first communication request message to the second terminal device. Then, the second terminal device sends the second communication request message to the third terminal device. Then, the third terminal device determines the second protection indication information based on the second communication request message, and then sends the second protection indication information to the second terminal device. The second terminal device sends the second protection indication information to the first terminal device, to implement negotiation consistency of the protection mechanism between the first terminal device and the third terminal device.

The foregoing embodiment defines a case in which a same CP security algorithm is used between the first terminal device and the second terminal device and between the second terminal device and the third terminal device. Optionally, only a process of negotiating consistency between the CP security protection manner between the first terminal device and the second terminal device and the CP security protection manner between the second terminal device and the third terminal device is performed, and the CP security protection manner is the second security protection manner in the embodiment shown in FIG. 3A and FIG. 3B. Whether the CP security algorithm between the first terminal device and the second terminal device is the same as the CP security algorithm between the second terminal device and the third terminal device is not limited.

In this case, in the foregoing embodiment, only a mechanism of negotiating consistency of the second security protection manner and a method of negotiating consistency of the second security protection manner need to be retained. There is a corresponding CP security algorithm between the first terminal device and the second terminal device, and there is a corresponding CP security algorithm between the second terminal device and the third terminal device. Similarly, there is a corresponding UP security algorithm between the first terminal device and the second terminal device, and there is a corresponding UP security algorithm between the second terminal device and the third terminal device. In addition, the corresponding UP security algorithm between the first terminal device and the second terminal device and the corresponding UP security algorithm between the second terminal device and the third terminal device may be the same or may be different.

In this embodiment, different security algorithms mean that when security protection needs to be performed, different algorithms may be used, and when security protection does not need to be performed, all algorithms used are null algorithms. The foregoing descriptions are applicable to the encryption algorithm and the integrity protection algorithm.

It should be noted that, the second terminal device uses the CP integrity protection algorithm and the CP encryption algorithm that are determined by the third terminal device and that are received in step 304 as subsequent protection algorithms. If the CP integrity protection algorithm or the encryption algorithm is a null algorithm, the determined CP integrity protection algorithm or the determined CP encryption algorithm between the second terminal device and the first terminal device is also a null algorithm.

In the embodiment shown in FIG. 3A and FIG. 3B, an example in which the third terminal device determines the protection mechanism, the CP security protection manner, the UP security protection manner, the CP integrity protection algorithm, and the CP integrity protection algorithm between the first terminal device and the third terminal device is shown. The following shows a plurality of other possible implementations by using examples, and the plurality of possible implementations may be used in combination.
I. The second terminal device determines second protection indication information.

In the embodiment shown in FIG. 3A and FIG. 3B, step 302 is replaced with the following: The second terminal device determines the second protection indication information based on the first communication request message

A manner in which the second terminal device determines the second protection indication information is similar to the manner in which the third terminal device determines the second protection indication information in step 214 in the embodiment shown in FIG. 2A-1 and FIG. 2A-2. For details, refer to the related descriptions of step 214 in the embodiment shown in FIG. 2A-1 and FIG. 2A-2. Details are not described herein again.

Step 304 is replaced with the following: The second terminal device sends a DSM Command2 message to the first terminal device, where the DSM Command2 message carries the second protection indication information.

Step 303, step 305, and step 306 are not performed.

II. The second terminal device determines a second security protection manner.

In the related descriptions of step 303 in the embodiment shown in FIG. 3A and FIG. 3B, that the third terminal device determines a second security protection manner according to the third security policy is replaced with the following: The second terminal device determines the second security protection manner according to the third security policy.

Optionally, the second terminal device determines the second security protection manner according to the third security policy and the fifth security policy; or the second terminal device determines the second security protection manner according to the third security policy, the fourth security policy, and the fifth security policy.

It should be noted that, the second terminal device determines the second security protection manner after receiving the first communication request message in step 301. Therefore, the second terminal device may send the second security protection manner to the third terminal device in step 302. Optionally, the second terminal device may send the second security protection manner to the first terminal device in step 307.

A manner in which the second terminal device determines the second security protection manner is similar to the manner in which the third terminal device determines the second security protection manner in step 303. For details, refer to the related descriptions in step 303. Details are not described herein again. For related descriptions of the second security protection manner, the third security policy, and the fifth security policy, refer to the related descriptions of the embodiment shown in FIG. 3A and FIG. 3B. Details are not described herein again.

The following shows two possible implementations of the third terminal device.
1. The third terminal device may perform CP security protection on signaling of the first terminal device and the third terminal device in the second security protection manner.
2. The third terminal device determines a fourth security policy, where the fourth security policy is a CP security policy that is determined by the third terminal device and that corresponds to the service to be used by the first terminal device. Then, the third terminal device determines whether encryption protection in the second security protection manner matches encryption protection indicated by the fourth security policy, and/or whether integrity protection in the second security protection manner matches integrity protection indicated by the fourth security policy. If encryption protection in the second security protection manner matches encryption protection indicated by the fourth security policy, and/or integrity protection in the second security protection manner matches integrity protection indicated by the fourth security policy, the third terminal device may perform CP security protection on signaling of the first terminal device and the third terminal device in the second security protection manner. If encryption protection in the second security protection manner does not match encryption protection indicated by the fourth security policy, and/or integrity protection in the second security protection manner does not match integrity protection indicated by the fourth security policy, the third terminal device sends a rejection a message to the second terminal device, to suspend establishment of a connection between the first terminal device and the third terminal device.

The following describes that encryption protection in the second security protection manner and encryption protection indicated by the fourth security policy include a plurality of possible forms. The following uses examples for description.
1. The second security protection manner is disabling encryption protection, and encryption protection indicated by the fourth security policy is required.
2. The second security protection manner is enabling encryption protection, and encryption protection indicated by the first security policy is not needed.

The following describes that integrity protection in the second security protection manner and integrity protection indicated by the fourth security policy include a plurality of possible forms. The following uses examples for description.
1. The second security protection manner is disabling integrity protection, and integrity protection indicated by the fourth security policy is required.
2. The second security protection manner is enabling integrity protection, and integrity protection indicated by the fourth security policy is not needed.

In a case other than the mismatch case shown above, the third terminal device may perform a security protection manner on a signaling plane between the first terminal device and the third terminal device in the second security protection manner For example, if the second security protection manner is enabling encryption protection and disabling integrity protection, encryption protection indicated by the fourth security policy is required, and integrity protection indicated by the fourth security policy is preferred, the third terminal device may perform CP security protection on the signaling of the first terminal device and the third terminal device in the second security protection manner.

III. The second terminal device determines a first security protection manner.

The following describes two possible implementations in which the second terminal device determines the first security protection manner.

Implementation 1: In step 309 in the embodiment shown in FIG. 3A and FIG. 3B, the DSM Complete1 message carries a first security policy. In the embodiment shown in FIG. 3A and FIG. 3B, step 309a is newly added, and step 311 is not performed.

Step 309a: The second terminal device determines the first security protection manner according to the first security policy.

Optionally, the second terminal device determines the first security protection manner according to the first security policy and the second security policy.

In addition, the second terminal device sends the first security protection manner to the third terminal device by using the DSM Complete2 message in the foregoing step 310.

A manner in which the second terminal device determines the first security protection manner is similar to that in step 311 in the embodiment shown in FIG. 3A and FIG. 3B. For details, refer to the related descriptions of step 311 in the embodiment shown in FIG. 3A and FIG. 3B. Details are not described herein again. For related descriptions of the first security protection manner, the first security policy, and the second security policy, refer to the related descriptions of the embodiment shown in FIG. 3A and FIG. 3B. Details are not described herein again.

The following shows two possible implementations of the third terminal device.
1. The third terminal device may perform UP security protection on data of the first terminal device and the third terminal device in the first security protection manner.
2. The third terminal device determines a sixth security policy, where the sixth security policy is a UP security policy that is determined by the third terminal device and that corresponds to the service to be used by the first terminal device. Then, the third terminal device determines whether encryption protection in the first security protection manner matches encryption protection indicated by the sixth security policy, and/or whether integrity protection in the first security protection manner matches integrity protection indicated by the sixth security policy. If encryption protection in the first security protection manner matches encryption protection indicated by the sixth security policy, and/or integrity protection in the first security protection manner matches integrity protection indicated by the sixth security policy, the third terminal device may perform UP security protection on data of the first terminal device and the third terminal device in the first security protection manner.

Based on the foregoing two implementations, the third terminal device performs step 312. In step 312, the second communication accept message may carry the first security protection manner or may not carry the first security protection manner.

It should be noted that, if encryption protection in the first security protection manner does not match encryption protection indicated by the sixth security policy, and/or integrity protection in the first security protection manner does not match integrity protection indicated by the sixth security policy, the third terminal device sends a rejection message to the second terminal device, to suspend establishment of a connection between the first terminal device and the third terminal device.

The following describes that encryption protection in the first security protection manner and encryption protection indicated by the sixth security policy include a plurality of possible forms. The following uses examples for description.
1. The first security protection manner is disabling encryption protection, and encryption protection indicated by the sixth security policy is required.
2. The first security protection manner is enabling encryption protection, and encryption protection indicated by the sixth security policy is not needed.

The following describes that integrity protection in the first security protection manner and integrity protection indicated by the sixth security policy include a plurality of possible forms. The following uses examples for description.
1. The first security protection manner is disabling integrity protection, and integrity protection indicated by the sixth security policy is required.
2. The first security protection manner is enabling integrity protection, and integrity protection indicated by the sixth security policy is not needed.

In a case other than the mismatch case shown above, the third terminal device may perform UP security protection on the data of the first terminal device and the third terminal device in the first security protection manner. For example, if the first security protection manner is enabling encryption protection and disabling integrity protection, encryption protection indicated by the sixth security policy is required, and integrity protection indicated by the sixth security policy is preferred, the third terminal device may perform UP security protection on the data of the first terminal device and the third terminal device in the first security protection manner.

Implementation 2: In step 304 in the embodiment shown in FIG. 3A and FIG. 3B, the DSM Command2 message carries a sixth security policy. In this case, step 304a is newly added, and step 304a is performed after step 304. Step 304a: The second terminal device determines the first security protection manner according to the sixth security policy.

Optionally, the second terminal device determines the first security protection manner according to the sixth security policy and the second security policy. Then, the second terminal device sends the first security protection manner to the first terminal device by using the DSM Command1 message in step 307 in the embodiment shown in FIG. 3A and FIG. 3B. The sixth security policy is a UP security policy that is determined by the third terminal device and that corresponds to the service to be used by the first terminal device.

A manner in which the second terminal device determines the first security protection manner is similar to that in step 311 in the embodiment shown in FIG. 3A and FIG. 3B. For details, refer to the related descriptions of step 311 in the embodiment shown in FIG. 3A and FIG. 3B. Details are not described herein again. For related descriptions of the first security protection manner and the second security policy, refer to the related descriptions of the embodiment shown in FIG. 3A and FIG. 3B. Details are not described herein again. In this case, the first security policy may not be carried in step 309 and step 310, and step 311 is not performed.

The following shows two possible implementations of the first terminal device.

Manner 1: The first terminal device may perform UP security protection on data of the first terminal device and the third terminal device in the first security protection manner.

Manner 2: The first terminal device determines whether encryption protection in the first security protection manner matches encryption protection indicated by the first security policy, and/or whether integrity protection in the first security protection manner matches integrity protection indicated by the first security policy. If encryption protection in the first security protection manner matches encryption protection indicated by the first security policy, and/or integrity protection in the first security protection manner matches integrity protection indicated by the first security policy, the first terminal device may perform UP security protection on data of the first terminal device and the third terminal device in the first security protection manner.

Based on the foregoing two implementations, the third terminal device performs step 312. In step 312, the second communication accept message may carry the first security protection manner or may not carry the first security protection manner. In addition, the first communication accept message in step 313 does not carry the first security protection manner.

It should be noted that, if encryption protection in the first security protection manner does not match encryption protection indicated by the first security policy, and/or integrity protection in the first security protection manner does not match integrity protection indicated by the first security policy, the third terminal device sends a rejection message to the second terminal device, to suspend establishment of a connection between the first terminal device and the third terminal device.

An execution manner of the first terminal device is similar to an execution manner of the third terminal device in the foregoing implementation 1. For details, refer to the related descriptions of the execution manner of the third terminal device in the foregoing implementation 1. Details are not described herein again.

IV The first terminal device determines a first security protection manner.

A difference from the embodiment shown in FIG. 3A and FIG. 3B lies in that: In step 304 in the embodiment shown in FIG. 3A and FIG. 3B, the DSM Command2 message carries a sixth security policy, and the sixth security policy is a UP security policy that is determined by the third terminal device and that corresponds to the service to be used by the first terminal device. The DSM Command1 message in step 307 carries the sixth security policy. In addition, step 308a is newly added. Step 308a: The first terminal device determines the first security protection manner according to the sixth security policy and the first security policy.

An execution manner of the second terminal device is similar to an execution manner of the third terminal device in the foregoing implementation 1. For details, refer to the related descriptions of the execution manner of the third terminal device in the foregoing implementation 1. Details are not described herein again.

The DSM Completel message in step 309 carries the first security protection manner. The DSM Complete2 message in step 310 carries the first security protection manner. Step 311 is not performed. The second communication accept message in step 312 does not carry the first security protection manner, and the first communication accept message in step 313 does not carry the first security protection manner.

V. The first terminal device determines first protection indication information, and uses a protection mechanism indicated by the first protection indication information as a finally negotiated protection mechanism between the first terminal device and the third terminal device. The first terminal device sends the first protection indication information to the second terminal device by using the first communication request message in step 301, and then the second terminal device sends the first protection indication information to the third terminal device by using the second communication request message. Both the second terminal device and the third terminal device determine the protection mechanism indicated by the first protection indication information, and perform signaling transmission or data transmission by using the protection mechanism.

Specifically, in this implementation, a difference from the embodiment shown in FIG. 3A and FIG. 3B lies in the following:
Step 303 is not performed, and the DSM Command2 message in step 304 does not carry the second protection indication information.
Step 305 is replaced with: when the first protection indication information indicates a hop-by-hop protection mechanism, verifying the first communication request message. Step 306 is replaced with: when the verification succeeds, generating the second communication request message, where the second communication request message carries the first protection indication information. Step 305 and step 306 are performed before step 302.

The DSM Command1 message in step 307 does not carry the second protection indication information, and step 308 is not performed.

VI. A CP security algorithm (including a CP encryption algorithm and a CP integrity protection algorithm) between the first terminal device and the second terminal device is different from a CP security algorithm between the second terminal device and the third terminal device.

FIG. 3A and FIG. 3B show a solution in which the CP security algorithm between the first terminal device and the second terminal device is the same as the CP security algorithm between the second terminal device and the third terminal device. During actual application, the CP security algorithm between the first terminal device and the second terminal device may be different from the CP security algorithm between the second terminal device and the third terminal device.

In this implementation, the second terminal device does not need to send the security capability of the first terminal device to the third terminal device in step 302 of the embodiment shown in FIG. 3A and FIG. 3B. The third terminal device determines, based on the security capability of the second terminal device and the security capability of the third terminal device, a CP encryption algorithm 1 and a CP integrity protection algorithm 1 that are supported by both the second terminal device and the third terminal device, and uses the CP encryption algorithm 1 and the CP integrity protection algorithm 1 as the CP security algorithm between the second terminal device and the third terminal device.

It should be noted that the third terminal device should consider the second security protection manner when determining the CP security algorithm between the second terminal device and the third terminal device. If the second security protection manner includes disabling encryption protection, the third terminal device determines to select a null encryption algorithm; or if the second security protection manner includes disabling integrity protection, the third terminal device selects a null integrity protection algorithm.

The second terminal device determines, based on the security capability of the first terminal device and the security capability of the second terminal device, a CP encryption algorithm 2 and a CP integrity protection algorithm 2 that are supported by both the first terminal device and the second terminal device. Then, the second terminal device sends the CP encryption algorithm 2 and the CP integrity protection algorithm 2 to the first terminal device.

It should be noted that the second terminal device should consider the second security protection manner when determining the CP security algorithm between the first terminal device and the second terminal device. If the second security protection manner includes disabling encryption protection, the second terminal device determines to select a null encryption algorithm; or if the second security protection manner includes disabling integrity protection, the second terminal device selects a null integrity protection algorithm. Alternatively, the second terminal device should consider the received CP security algorithm between the second terminal device and the third terminal device when determining the CP security algorithm between the first terminal device and the second terminal device. If a CP encryption algorithm included in the CP security algorithm between the second terminal device and the third terminal device is a null encryption algorithm, the second terminal device determines to select the null encryption algorithm; or if an integrity protection algorithm included in the CP security algorithm between the second terminal device and the third terminal device is a null integrity protection algorithm, the second terminal device selects the null integrity protection algorithm.

In this way, CP security protection is performed between the first terminal device and the second terminal device by using the CP encryption algorithm 2 and the CP integrity protection algorithm 2, and CP security protection is performed between the second terminal device and the third terminal device by using the CP encryption algorithm 1 and the CP integrity protection algorithm 1.

VII. A UP security algorithm (including a UP encryption algorithm and a UP integrity protection algorithm) between the first terminal device and the second terminal device is different from a UP security algorithm between the second terminal device and the third terminal device.

The second terminal device does not need to send the security capability of the first terminal device to the third terminal device in step 302 of the embodiment shown in FIG. 3A and FIG. 3B. The third terminal device determines, based on the security capability of the second terminal device and the security capability of the third terminal device, a UP encryption algorithm 1 and a UP integrity protection algorithm 1 that are supported by both the second terminal device and the third terminal device. Then, the third terminal device sends the UP encryption algorithm 1 and the UP integrity protection algorithm 1 to the second terminal device.

It should be noted that, when determining the UP encryption algorithm 1 and the UP integrity protection algorithm 1, the third terminal device should consider the first security protection manner determined in step 311 in the embodiment shown in FIG. 3A and FIG. 3B. If the first security protection manner includes disabling encryption protection, the third terminal device determines to select a null encryption algorithm; or if the first security protection manner includes disabling integrity protection, the third terminal device selects a null integrity protection algorithm.

The second terminal device determines, based on the security capability of the first terminal device and the security capability of the second terminal device, a UP encryption algorithm 2 and a UP integrity protection algorithm 2 that are supported by both the first terminal device and the second terminal device. Then, the second terminal device sends the UP encryption algorithm 2 and the UP integrity protection algorithm 2 to the first terminal device.

It should be noted that, when determining the UP encryption algorithm 2 and the UP integrity protection algorithm 2, the second terminal device should consider the first security protection manner received in step 312 in the embodiment shown in FIG. 3A and FIG. 3B. If the first security protection manner includes disabling encryption protection, the second terminal device determines to select a null encryption algorithm; or if the first security protection manner includes disabling integrity protection, the second terminal device selects a null integrity protection algorithm.

In this way, UP security protection is performed between the first terminal device and the second terminal device by using the UP encryption algorithm 2 and the UP integrity protection algorithm 2, and UP security protection is performed between the second terminal device and the third terminal device by using the UP encryption algorithm 1 and the UP integrity protection algorithm 1.

VIII. A UP security algorithm (including a UP security algorithm between the first terminal device and the second terminal device and a UP security algorithm between the second terminal device and the third terminal device) is different from a CP security algorithm (including a CP security algorithm between the first terminal device and the second terminal device and a CP security algorithm between the second terminal device and the third terminal device).

The following shows a plurality of possible implementations in which the third terminal device determines the UP security algorithm.

Implementation 1: The third terminal device determines the UP security algorithm with reference to the first security protection manner in step 311 in the embodiment shown in FIG. 3A and FIG. 3B. A specific determining manner is similar to the manner in which the third terminal device determines the CP security algorithm in step 303 in the embodiment shown in FIG. 3A and FIG. 3B. For example, the third terminal device may determine an encryption algorithm and an integrity protection algorithm that are supported by all of the first terminal device, the second terminal device, and the third terminal device, and then determine the UP security algorithm (an encryption algorithm and an integrity protection algorithm) based on the first security protection manner.

Implementation 2: In a process performed by the third terminal device in step 303 in the embodiment shown in FIG. 3A and FIG. 3B, the third terminal device generates the UP security algorithm. A specific determining manner is similar to the manner in which the third terminal device determines the CP security algorithm in step 303 in the embodiment shown in FIG. 3A and FIG. 3B. Then, the third terminal device sends the UP security algorithm to the second terminal device, and then the second terminal device sends the UP security algorithm to the first terminal device.

In this implementation, when the third terminal device performs step 303, the third terminal device has not determined the first security protection manner. Therefore, a UP encryption algorithm included in the UP security algorithm may be a non-null algorithm, and a UP integrity protection algorithm included in the UP security algorithm may be a non-null integrity algorithm. In step 311, after the third terminal device determines the first security protection manner, if the first security protection manner includes disabling encryption protection and/or disabling integrity protection, a UP encryption protection algorithm included in the UP security protection algorithm should be updated to a null encryption algorithm; and/or a UP integrity protection algorithm included in the UP security protection algorithm should be updated to a null integrity protection algorithm.

In an embodiment shown in FIG. 4, negotiation consistency of a security protection manner between a first terminal device and a third terminal device is implemented in an existing interaction procedure between the first terminal device and the third terminal device. In addition, the embodiment shown in FIG. 4 is negotiation of the security protection manner between the first terminal device and the third terminal device in an end-to-end protection mechanism.

FIG. 4 is a schematic diagram of another embodiment of a communication method according to embodiments of this application. In FIG. 4, the method includes the following steps.

401: A first terminal device sends a first communication request message to a second terminal device.

402: The second terminal device sends a second communication request message to a third terminal device.

Step 401 and step 402 are similar to step 301 and step 302 in the embodiment shown in FIG. 3A and

FIG. 3B. For details, refer to the related descriptions of step 301 and step 302 in the embodiment shown in FIG. 3A and FIG. 3B. Details are not described herein again.

403: Optionally, the third terminal device determines third protection indication information based on first protection indication information.

Step 403 is similar to step 303 in the embodiment shown in FIG. 3A and FIG. 3B. A difference lies in that a protection mechanism indicated by the third protection indication information is an end-to-end protection mechanism.

404: The third terminal device sends a DSM Command2 message to the second terminal device.

Step 404 is similar to step 304 in the embodiment shown in FIG. 3A and FIG. 3B. A difference lies in that the protection mechanism indicated by the third protection indication information is the end-to-end protection mechanism, and the third terminal device performs integrity protection on the DSM Command2 message by using a third shared key and a first integrity protection algorithm. The third shared key is a shared key between the first terminal device and the third terminal device. The third shared key is similar to a first shared key. For details, refer to the related descriptions of step 215a in the embodiment shown in FIG. 2A-1 and FIG. 2A-2. Details are not described herein again.

Optionally, the DSM Command2 message further carries first indication information, and the first indication information indicates to use a security protection manner of an upper-layer protocol or a lower-layer protocol.

In the end-to-end protection mechanism, the security protection manner of the upper-layer protocol and the security protection manner of the lower-layer protocol are used. The third terminal device may indicate, by using the first indication information, a security protection manner of a protocol type to be used by the first terminal device.

405: The second terminal device sends the DSM Command2 message to the first terminal device.

Because the protection mechanism indicated by the third protection indication information is the end-to-end protection mechanism, the second terminal device may directly send the DSM Command2 message to the first terminal device.

406: When the third protection indication information indicates the end-to-end protection mechanism, the first terminal device verifies the DSM Command2 message.

Because the protection mechanism indicated by the third protection indication information is the end-to-end protection mechanism, the first terminal device may verify the DSM Command2 message by using the third shared key and the first integrity protection algorithm. A specific verification manner is similar to the manner in which the first terminal device verifies the DSM Command1 message in step 308 in the embodiment shown in FIG. 3A and FIG. 3B. For details, refer to the related descriptions of the manner in which the first terminal device verifies the DSM Command1 message in step 308 in the embodiment shown in FIG. 3A and FIG. 3B. Details are not described herein again.

407: The first terminal device sends a DSM Completel message to the second terminal device.

408: The second terminal device sends a DSM Complete2 message to the third terminal device.

409: The third terminal device determines a third security protection manner according to a first security policy.

The third security protection manner is a security protection manner between the first terminal device and the third terminal device.

410: The third terminal device sends a second communication accept message to the second terminal device.

411: The second terminal device sends a first communication accept message to the first terminal device.

Step 407 to step 411 are similar to step 309 to step 313 in the embodiment shown in FIG. 3A and FIG. 3B. For details, refer to the related descriptions of step 309 to step 313 in the embodiment shown in FIG. 3A and FIG. 3B. Details are not described herein again.

The DSM Command2 message in step 404 and step 405 carries the first indication information.

If the first indication information indicates to use the security protection manner of the upper-layer protocol, where descriptions are provided by using an example in which an internet protocol security (internet protocol security, IPsec) manner is used, the first terminal device and the third terminal device determine, based on the first indication information and the third protection indication information, to select an IPsec security protection manner, for example, whether to enable IPsec encryption protection and whether to enable IPsec integrity protection. For example, the first security protection manner is enabling IPsec encryption protection and enabling IPsec integrity protection. IPsec has different profiles, and different profiles have different security protection manners. Security protection manners of some profiles include only encryption protection, and security protection manners of some profiles include only integrity protection. Therefore, the first terminal device and the third terminal device may select an internet protocol security profile (IPsec profile) with reference to the first security protection manner For example, if the first security protection manner is enabling IPsec encryption protection and enabling IPsec integrity protection, the first terminal device and the third terminal device select an IPsec profile that supports IPsec encryption protection and IPsec integrity protection.

In this embodiment of this application, the third terminal device determines the first security protection manner according to the first security policy, and then sends the first security protection manner to the second terminal device. Then, the second terminal device receives the first security protection manner, and sends the first security protection manner to the first terminal device, to implement negotiation consistency between a security protection manner between the first terminal device and the second terminal device and a security protection manner between the second terminal device and the third terminal device, and improve security of transmitting signaling and data between the first terminal device and the third terminal device. In addition, the first terminal device sends the first communication request message to the second terminal device. Then, the second terminal device sends the second communication request message to the third terminal device. Then, the third terminal device determines the third protection indication information based on the second communication request message, and then sends the third protection indication information to the second terminal device. The second terminal device sends the third protection indication information to the first terminal device, to implement negotiation consistency of a protection mechanism between the first terminal device and the third terminal device.

In the foregoing embodiment, the first communication request message and the second communication request message may be direct communication request (direct communication request) messages, or may be indirect communication request messages. This is not specifically limited in this application. The first communication accept message and the second communication accept message may be direct communication accept (direct communication accept) messages, or may be indirect communication accept messages. This is not specifically limited in this application.

Similarly, both the DSM Command1 message and the DSM Command2 message in the foregoing embodiment are direct SM Command messages. During actual application, an indirect SM Command message may also be used. This is not specifically limited in this application. Both the DSM Completel message and the DSM Complete2 message in the foregoing embodiment are direct SM Complete messages. During actual application, an indirect SM Complete message may also be used. This is not specifically limited in this application. In the foregoing embodiment, a direct message related to direct (direct) is also applicable to an indirect (indirect) message.

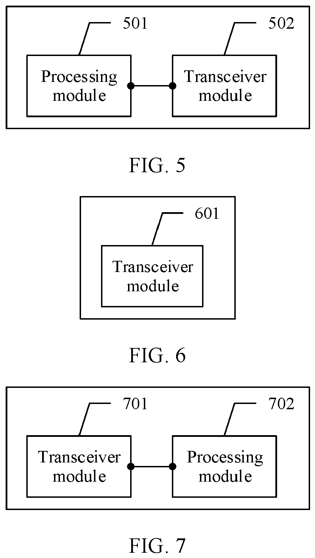

The following describes a first terminal device provided in embodiments of this application. FIG. 5 is a schematic diagram of a structure of a first terminal device according to an embodiment of this application. The first terminal device may be configured to perform steps performed by the first terminal device in embodiments shown in FIG. 2A-1 and FIG. 2A-2, FIG. 3A and FIG. 3B, and FIG. 4. For details, refer to the related descriptions in the foregoing method embodiments.

The first terminal device includes a processing module 501 and a transceiver module 502.

The processing module 501 is configured to determine a first security policy corresponding to a service to be used by the first terminal device.

The transceiver module 502 is configured to send the first security policy to a second terminal device, where the first terminal device communicates with a third terminal device via the second terminal device.

The transceiver module 502 is further configured to receive a first security protection manner sent by the second terminal device, where the first security protection manner is a security protection manner between the first terminal device and the second terminal device.

In a possible implementation, the transceiver module 502 is further configured to:
send first service information to the second terminal device, where the first service information is service information corresponding to the service to be used by the first terminal device.

In another possible implementation, the transceiver module 502 is further configured to:
send a security capability of the first terminal device to the second terminal device; and
receive a first encryption algorithm and a first integrity protection algorithm that are sent by the second terminal device.

In another possible implementation, the transceiver module 502 is further configured to:
send first protection indication information to the second terminal device, where the first protection indication information indicates a protection mechanism between the first terminal device and the third terminal device; and
receive a second message sent by the second terminal device, where the second message carries second protection indication information, and the second protection indication information indicates the protection mechanism between the first terminal device and the third terminal device.

In another possible implementation, the transceiver module 502 is further configured to:
receive the second message sent by the second terminal device, where the second message carries the second protection indication information, the second message is obtained by performing integrity protection on the second message by using a second shared key and the first integrity protection algorithm, and the second shared key is a shared key between the first terminal device and the second terminal device;
perform integrity verification on the second message by using the second shared key and the first integrity protection algorithm; and
when the verification succeeds, determine a hop-by-hop protection mechanism indicated by the second protection indication information.

In this embodiment of this application, the processing module 501 determines the first security policy, and the transceiver module 502 sends the first security policy to the second terminal device. The transceiver module 502 receives the first security protection manner sent by the second terminal device, where the first security protection manner is a security protection manner between the first terminal device and the second terminal device. This implements negotiation consistency between the security protection manner between the first terminal device and the second terminal device and a security protection manner between the second terminal device and the third terminal device, and improve security of data or signaling exchanged between the first terminal device and the third terminal device.

The following describes a second terminal device provided in embodiments of this application. FIG. 6 is a schematic diagram of a structure of a second terminal device according to an embodiment of this application. The second terminal device may be configured to perform steps performed by the second terminal device in embodiments shown in FIG. 2A-1 and FIG. 2A-2, FIG. 3A and FIG. 3B, and FIG. 4. For details, refer to the related descriptions in the foregoing method embodiments.

The second terminal device includes a transceiver module 601.

The transceiver module 601 is configured to: receive a first security policy sent by a first terminal device, where the first security policy is a security policy that is determined by the first terminal device and that corresponds to a service to be used by the first terminal device, and the first terminal device communicates with a third terminal device via the second terminal device; send the first security policy to the third terminal device; receive a first security protection manner sent by the third terminal device, where the first security protection manner is a security protection manner between the second terminal device and the third terminal device; and send the first security protection manner to the first terminal device, where the first security protection manner is a security protection manner between the first terminal device and the second terminal device.

In a possible implementation, the transceiver module 601 is further configured to:
receive first service information sent by the first terminal device, where the first service information is service information corresponding to the service to be used by the first terminal device; and send the first service information to the third terminal device.

In another possible implementation, the transceiver module 601 is further configured to:
receive a security capability that is of the first terminal device and that is sent by the first terminal device; send the security capability of the first terminal device and a security capability of the second terminal device to the third terminal device; receive a first encryption algorithm and a first integrity protection algorithm that are sent by the third terminal device; and send the first encryption algorithm and the first integrity protection algorithm to the first terminal device.

In another possible implementation, the transceiver module 601 is further configured to:
receive first protection indication information sent by the first terminal device, where the first protection indication information indicates a protection mechanism between the first terminal device and the third terminal device; send the first protection indication information to the third terminal device; receive a first message sent by the third terminal device, where the first message carries second protection indication information; and send a second message to the first terminal device, where the second message carries the second protection indication information.

In another possible implementation, the transceiver module 601 is specifically configured to:
perform integrity verification on the first message by using a first shared key and the first integrity protection algorithm, where the first shared key is a shared key between the second terminal device and the third terminal device; when the verification succeeds, generate the second message, and perform integrity protection on the second message by using a second shared key and the first integrity protection algorithm, where the second message carries the second protection indication information, and the second shared key is a shared key between the first terminal device and the second terminal device; and send the second message to the first terminal device.

In this embodiment of this application, the transceiver module 601 receives the first security policy sent by the first terminal device, and sends the first security policy to the third terminal device, so that the third terminal device can determine the first security protection manner by receiving the first security policy of the first terminal device. In this way, the transceiver module 601 may receive the first security protection manner, and send the first security protection manner to the first terminal device, to implement negotiation consistency between the security protection manner between the first terminal device and the second terminal device and the security protection manner between the second terminal device and the third terminal device, and improve security of data or signaling exchanged between the first terminal device and the third terminal device.

The following describes a third terminal device provided in embodiments of this application. FIG. 7 is a schematic diagram of a structure of a third terminal device according to an embodiment of this application. The third terminal device may be configured to perform steps performed by the third terminal device in embodiments shown in FIG. 2A-1 and FIG. 2A-2, FIG. 3A and FIG. 3B, and FIG. 4. For details, refer to the related descriptions in the foregoing method embodiments.

The third terminal device includes a transceiver module 701 and a processing module 702.

The transceiver module 701 is configured to receive a first security policy sent by a second terminal device, where the first security policy is a security policy that is determined by a first terminal device and that corresponds to a service to be used by the first terminal device, and the first terminal device communicates with the third terminal device via the second terminal device.

The processing module 702 is configured to determine a first security protection manner according to the first security policy.

The transceiver module 701 is further configured to send the first security protection manner to the second terminal device, where the first security protection manner is a security protection manner between the second terminal device and the third terminal device.

In a possible implementation, the transceiver module 701 is further configured to:
receive first service information sent by the second terminal device, where the first service information is service information corresponding to the service to be used by the first terminal device.

The processing module 702 is further configured to:
determine, based on the first service information, a second security policy corresponding to the service to be used by the first terminal device.

The processing module 702 is specifically configured to:
determine the first security protection manner according to the first security policy and the second security policy.

In another possible implementation, the transceiver module 701 is further configured to:
receive a security capability of the first terminal device and a security capability of the second terminal device that are sent by the second terminal device;

The processing module 702 is further configured to:
determine a first encryption algorithm and a first integrity protection algorithm based on a security capability of the third terminal device, the security capability of the first terminal device, and the security capability of the second terminal device.

The transceiver module 701 is further configured to:
send the first encryption algorithm and the first integrity protection algorithm to the second terminal device.

In another possible implementation, the transceiver module 701 is further configured to:
receive first protection indication information sent by the second terminal device, where the first protection indication information indicates a protection mechanism between the first terminal device and the third terminal device;

The processing module 702 is further configured to:
determine second protection indication information based on the first protection indication information, where the second protection indication information indicates the protection mechanism between the first terminal device and the third terminal device.

The transceiver module 701 is further configured to:
send a first message to the second terminal device, where the first message carries the second protection indication information.

In another possible implementation, the processing module 702 is further configured to:
when the second protection indication information indicates a hop-by-hop protection mechanism, perform integrity protection on the first message by using a first shared key and the first integrity protection algorithm, where the first shared key is a shared key between the second terminal device and the third terminal device.

In this embodiment of this application, the transceiver module 701 receives the first security policy determined by the first terminal device, the processing module 702 determines the first security protection manner according to the first security policy, and then the transceiver module 701 sends the first security protection manner to the second terminal device. This implements negotiation consistency between the security protection manner between the first terminal device and the second terminal device and the security protection manner between the second terminal device and the third terminal device, and improve security of data or signaling exchanged between the first terminal device and the third terminal device.

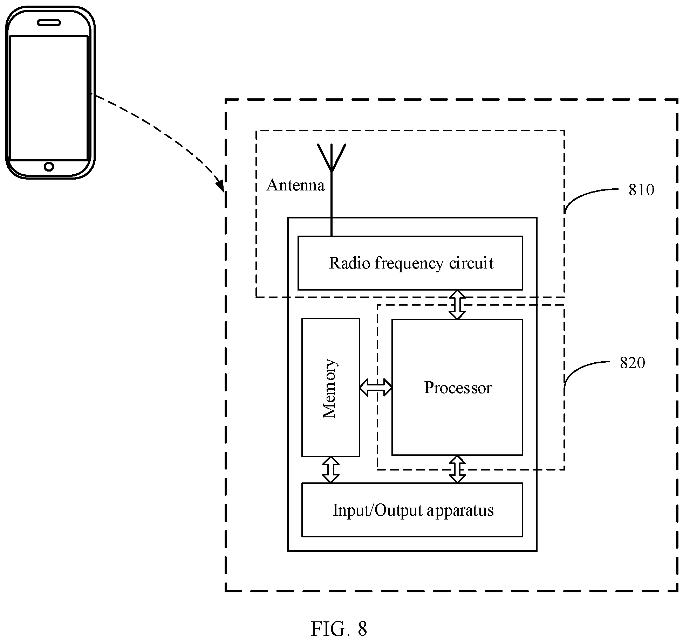

FIG. 8 is a schematic diagram of a possible structure of a first terminal device below.

FIG. 8 is a schematic diagram of a structure of a simplified first terminal device. For ease of understanding and convenience of figure illustration, an example in which the first terminal device is a mobile phone is used in FIG. 8. As shown in FIG. 8, the first terminal device includes a processor, a memory, a radio frequency circuit, an antenna, and an input/output apparatus. The processor is mainly configured to: process a communication protocol and communication data, control the first terminal device, execute a software program, process data of the software program, and the like. The memory is mainly configured to store a software program and data. The radio frequency circuit is mainly configured to: convert a baseband signal and a radio frequency signal, and process the radio frequency signal. The antenna is mainly configured to receive and send a radio frequency signal in a form of an electromagnetic wave. The input/output apparatus, such as a touchscreen, a display screen, or a keyboard, is mainly configured to receive data input by a user and output data to the user. It should be noted that some types of first terminal devices may have no input/output apparatus.

When data needs to be sent, the processor performs baseband processing on to-be-sent data, and then outputs a baseband signal to a radio frequency circuit. After performing radio frequency processing on the baseband signal, the radio frequency circuit sends a radio frequency signal to the outside in a form of an electromagnetic wave through the antenna. When data is sent to the first terminal device, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 8. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the first terminal device, and the processor that has a processing function may be considered as a processing unit of the first terminal device. As shown in FIG. 8, the first terminal device includes a transceiver unit 810 and a processing unit 820. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 810 and that is configured to implement a receiving function may be considered as a receiving unit, and a component that is in the transceiver unit 810 and that is configured to implement a sending function may be considered as a sending unit. To be specific, the transceiver unit 810 includes the receiving unit and the sending unit. The transceiver unit may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like.

It should be understood that the transceiver unit 810 is configured to perform a sending operation and a receiving operation of the first terminal device in the foregoing method embodiments, and the processing unit 820 is configured to perform an operation other than the receiving and sending operations of the first terminal device in the foregoing method embodiments.

For example, in a possible implementation, the transceiver unit 810 is configured to perform receiving and sending operations of the first terminal device in step 202 in FIG. 2A-1 and FIG. 2A-2, and/or the transceiver unit 810 is further configured to perform other receiving and sending steps of the first terminal device in embodiments of this application.

When the first terminal device is a chip, the chip includes a transceiver unit and a processing unit. The transceiver unit may be an input/output circuit or a communication interface. The processing unit is a processor, a microprocessor, an integrated circuit, or a logical circuit integrated on the chip.

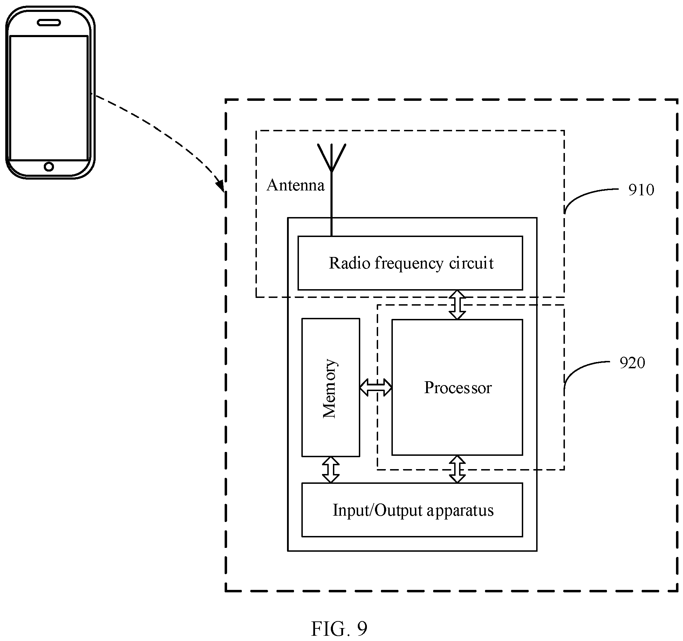

FIG. 9 is a schematic diagram of a possible structure of a second terminal device below.

FIG. 9 is a schematic diagram of a structure of a simplified second terminal device. For ease of understanding and convenience of figure illustration, an example in which the second terminal device is a mobile phone is used in FIG. 9. As shown in FIG. 9, the second terminal device includes a processor, a memory, a radio frequency circuit, an antenna, and an input/output apparatus. The processor is mainly configured to: process a communication protocol and communication data, control the first terminal device, execute a software program, process data of the software program, and the like. The memory is mainly configured to store a software program and data. The radio frequency circuit is mainly configured to: convert a baseband signal and a radio frequency signal, and process the radio frequency signal. The antenna is mainly configured to receive and send a radio frequency signal in a form of an electromagnetic wave. The input/output apparatus, such as a touchscreen, a display screen, or a keyboard, is mainly configured to receive data input by a user and output data to the user. It should be noted that some types of second terminal devices may have no input/output apparatus.

When data needs to be sent, the processor performs baseband processing on to-be-sent data, and then outputs a baseband signal to a radio frequency circuit. After performing radio frequency processing on the baseband signal, the radio frequency circuit sends a radio frequency signal to the outside in a form of an electromagnetic wave through the antenna. When data is sent to the second terminal device, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 9. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the second terminal device, and the processor that has a processing function may be considered as a processing unit of the second terminal device. As shown in FIG. 9, the second terminal device includes a transceiver unit 910 and a processing unit 920. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 910 and that is configured to implement a receiving function may be considered as a receiving unit, and a component that is in the transceiver unit 910 and that is configured to implement a sending function may be considered as a sending unit. To be specific, the transceiver unit 910 includes the receiving unit and the sending unit. The transceiver unit may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like.

It should be understood that the transceiver unit 910 is configured to perform a sending operation and a receiving operation of the second terminal device in the foregoing method embodiments, and the processing unit 920 is configured to perform an operation other than the receiving and sending operations of the second terminal device in the foregoing method embodiments.

For example, in a possible implementation, the transceiver unit 910 is configured to perform receiving and sending operations of the second terminal device in step 203 in FIG. 2A-1 and FIG. 2A-2, and/or the transceiver unit 910 is further configured to perform other receiving and sending steps of the second terminal device in embodiments of this application.

When the second terminal device is a chip, the chip includes a transceiver unit and a processing unit. The transceiver unit may be an input/output circuit or a communication interface. The processing unit is a processor, a microprocessor, an integrated circuit, or a logical circuit integrated on the chip.

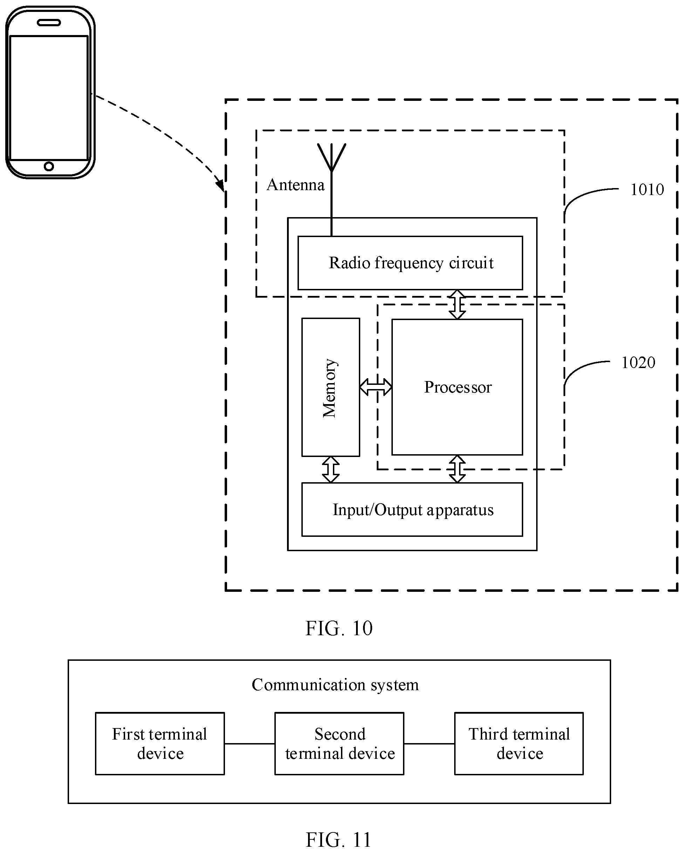

FIG. 10 is a schematic diagram of a possible structure of a third terminal device below.

FIG. 10 is a schematic diagram of a structure of a simplified third terminal device. For ease of understanding and convenience of figure illustration, an example in which the third terminal device is a mobile phone is used in FIG. 10. As shown in FIG. 10, the third terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store a software program and data. The radio frequency circuit is mainly configured to: convert a baseband signal and a radio frequency signal, and process the radio frequency signal. The antenna is mainly configured to receive and send a radio frequency signal in a form of an electromagnetic wave. The input/output apparatus, such as a touchscreen, a display screen, or a keyboard, is mainly configured to receive data input by a user and output data to the user. It should be noted that some types of third terminal devices may have no input/output apparatus.

When data needs to be sent, the processor performs baseband processing on to-be-sent data, and then outputs a baseband signal to a radio frequency circuit. After performing radio frequency processing on the baseband signal, the radio frequency circuit sends a radio frequency signal to the outside in a form of an electromagnetic wave through the antenna. When data is sent to the third terminal device, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 10. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the third terminal device, and the processor that has a processing function may be considered as a processing unit of the third terminal device. As shown in FIG. 10, the third terminal device includes a transceiver unit 1010 and a processing unit 1020. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1010 and that is configured to implement a receiving function may be considered as a receiving unit, and a component that is in the transceiver unit 1010 and that is configured to implement a sending function may be considered as a sending unit. To be specific, the transceiver unit 1010 includes the receiving unit and the sending unit. The transceiver unit may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like.

It should be understood that the transceiver unit 1010 is configured to perform a sending operation and a receiving operation of the third terminal device in the foregoing method embodiments, and the processing unit 1020 is configured to perform an operation other than the receiving and sending operations of the third terminal device in the foregoing method embodiments.

For example, in a possible implementation, the transceiver unit 1010 is configured to perform receiving and sending operations of the third terminal device in step 205 in FIG. 2A-1 and FIG. 2A-2, and/or the transceiver unit 1010 is further configured to perform other receiving and sending steps of the third terminal device in embodiments of this application.

When the third terminal device is a chip, the chip includes a transceiver unit and a processing unit. The transceiver unit may be an input/output circuit or a communication interface. The processing unit is a processor, a microprocessor, an integrated circuit, or a logical circuit integrated on the chip.

Refer to FIG. 11. An embodiment of this application further provides a communication system. The communication system includes the first terminal device shown in FIG. 5, the second terminal device shown in FIG. 6, and the third terminal device shown in FIG. 7. The first terminal device shown in FIG. 5 is configured to perform all or some of the steps performed by the first terminal device in the embodiment shown in FIG. 2A-1 and FIG. 2A-2, FIG. 3A and FIG. 3B, or FIG. 4. The second terminal device shown in FIG. 6 is configured to perform all or some of the steps performed by the second terminal device in the embodiment shown in FIG. 2A-1 and FIG. 2A-2, FIG. 3A and FIG. 3B, or FIG. 4. The third terminal device shown in FIG. 7 is configured to perform all or some of the steps performed by the third terminal device in the embodiment shown in FIG. 2A-1 and FIG. 2A-2, FIG. 3A and FIG. 3B, or FIG. 4.

An embodiment of this application further provides a computer program product including instructions. When the computer program product runs on a computer, the computer is enabled to perform the communication method in embodiments shown in FIG. 2A-1 and FIG. 2A-2, FIG. 3A and FIG. 3B, and FIG. 4.

An embodiment of this application further provides a computer-readable storage medium, including computer instructions. When the computer instructions are run on a computer, the computer is enabled to perform the communication methods in embodiments shown in FIG. 2A-1 and FIG. 2A-2, FIG. 3A and FIG. 3B, and FIG. 4.

An embodiment of this application further provides a chip apparatus, including a processor, configured to: be connected to a memory, and invoke a program stored in the memory, to enable the processor to perform the communication methods in embodiments shown in FIG. 2A-1 and FIG. 2A-2, FIG. 3A and FIG. 3B, and FIG. 4.

The processor mentioned in any of the foregoing designs may be a general-purpose central processing unit, a microprocessor, an application-specific integrated circuit (application-specific integrated circuit, ASIC), or one or more integrated circuits for controlling program execution of the communication method in embodiments shown in FIG. 2A-1 and FIG. 2A-2, FIG. 3A and FIG. 3B, and FIG. 4. The memory mentioned in any of the foregoing designs may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB drive, a removable hard disk, a read-only memory, a random access memory, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, wherein the method comprises:
determining, by a first terminal device, a first security policy corresponding to a service to be used by the first terminal device;
sending, by the first terminal device, the first security policy to a second terminal device;
receiving, by the second terminal device, the first security policy, and sending the first security policy to a third terminal device;
determining, by the third terminal device, a first security protection manner according to the first security policy;
sending, by the third terminal device, the first security protection manner to the second terminal device, wherein the first security protection manner is a security protection manner between the second terminal device and the third terminal device; and
receiving, by the second terminal device, the first security protection manner, and sending the first security protection manner to the first terminal device, wherein the first security protection manner is a security protection manner between the first terminal device and the second terminal device.

2. The method according to claim 1, wherein the method further comprises:
sending, by the first terminal device, first service information to the second terminal device, wherein the first service information is service information corresponding to the service to be used by the first terminal device;
receiving, by the second terminal device, the first service information, and sending the first service information to the third terminal device; and
determining, by the third terminal device based on the first service information, a second security policy corresponding to the service to be used by the first terminal device; and
the determining, by the third terminal device, a first security protection manner according to the first security policy comprises:
determining, by the third terminal device, the first security protection manner according to the first security policy and the second security policy.

3. The method according to claim 1 or 2, wherein the method further comprises:
sending, by the first terminal device, a security capability of the first terminal device to the second terminal device;
receiving, by the second terminal device, the security capability of the first terminal device;
sending, by the second terminal device, the security capability of the first terminal device and a security capability of the second terminal device to the third terminal device;
receiving, by the third terminal device, the security capability of the first terminal device and the security capability of the second terminal device that are sent by the second terminal device;
determining, by the third terminal device, a first encryption algorithm and a first integrity protection algorithm based on a security capability of the third terminal device, the security capability of the first terminal device, and the security capability of the second terminal device;
sending, by the third terminal device, the first encryption algorithm and the first integrity protection algorithm to the second terminal device; and
receiving, by the second terminal device, the first encryption algorithm and the first integrity protection algorithm, and sending the first encryption algorithm and the first integrity protection algorithm to the first terminal device.

4. The method according to claim 3, wherein the method further comprises:
sending, by the first terminal device, first protection indication information to the second terminal device, wherein the first protection indication information indicates a protection mechanism between the first terminal device and the third terminal device;
receiving, by the second terminal device, the first protection indication information, and sending the first protection indication information to the third terminal device;
determining, by the third terminal device, second protection indication information based on the first protection indication information, wherein the second protection indication information indicates the protection mechanism between the first terminal device and the third terminal device;
sending, by the third terminal device, a first message to the second terminal device, wherein the first message carries the second protection indication information; and
receiving, by the second terminal device, a second message, and sending the second message to the first terminal device, wherein the second message carries the second protection indication information.

5. The method according to claim 4, wherein before the receiving, by the second terminal device, a second message, and sending the second message to the first terminal device, the method further comprises:
when the second protection indication information indicates a hop-by-hop protection mechanism, performing, by the third terminal device, integrity protection on the first message by using a first shared key and the first integrity protection algorithm, wherein the first shared key is a shared key between the second terminal device and the third terminal device; and
the receiving, by the second terminal device, a second message, and sending the second message to the first terminal device comprises:
receiving, by the second terminal device, the first message sent by the third terminal device;
performing, by the second terminal device, integrity verification on the first message by using the first shared key and the first integrity protection algorithm;
when the verification succeeds, generating, by the second terminal device, the second message, and performing integrity protection on the second message by using a second shared key and the first integrity protection algorithm, wherein the second message carries the second protection indication information, and the second shared key is a shared key between the first terminal device and the second terminal device; and
sending, by the second terminal device, the second message to the first terminal device.

6. The method according to claim 5, wherein the method further comprises:
receiving, by the first terminal device, the second message;
performing, by the first terminal device, integrity verification on the second message by using the second shared key and the first integrity protection algorithm; and
when the verification succeeds, determining, by the first terminal device, the hop-by-hop protection mechanism indicated by the second protection indication information.

7. A communication method, wherein the method comprises:
determining, by a first terminal device, a first security policy corresponding to a service to be used by the first terminal device;
sending, by the first terminal device, the first security policy to a second terminal device, wherein the first terminal device communicates with a third terminal device via the second terminal device; and
receiving, by the first terminal device, a first security protection manner sent by the second terminal device, wherein the first security protection manner is a security protection manner between the first terminal device and the second terminal device.

8. The method according to claim 7, wherein the method further comprises:
sending, by the first terminal device, first service information to the second terminal device, wherein the first service information is service information corresponding to the service to be used by the first terminal device.

9. The method according to claim 7 or 8, wherein the method further comprises:
sending, by the first terminal device, a security capability of the first terminal device to the second terminal device; and
receiving, by the first terminal device, a first encryption algorithm and a first integrity protection algorithm that are sent by the second terminal device.

10. The method according to claim 9, wherein the method further comprises:
sending, by the first terminal device, first protection indication information to the second terminal device, wherein the first protection indication information indicates a protection mechanism between the first terminal device and the third terminal device; and
receiving, by the first terminal device, a second message sent by the second terminal device, wherein the second message carries second protection indication information, and the second protection indication information indicates the protection mechanism between the first terminal device and the third terminal device.

11. The method according to claim 10, wherein the receiving, by the first terminal device, a second message sent by the second terminal device comprises:
receiving, by the first terminal device, the second message sent by the second terminal device, wherein the second message carries the second protection indication information, the second message is obtained by performing integrity protection on the second message by using a second shared key and the first integrity protection algorithm, and the second shared key is a shared key between the first terminal device and the second terminal device;
performing, by the first terminal device, integrity verification on the second message by using the second shared key and the first integrity protection algorithm; and
when the verification succeeds, determining, by the first terminal device, a hop-by-hop protection mechanism indicated by the second protection indication information.

12. A communication method, wherein the method comprises:
receiving, by a second terminal device, a first security policy sent by a first terminal device, wherein the first security policy is a security policy that is determined by the first terminal device and that corresponds to a service to be used by the first terminal device, and the first terminal device communicates with a third terminal device via the second terminal device;
sending, by the second terminal device, the first security policy to the third terminal device;
receiving, by the second terminal device, a first security protection manner sent by the third terminal device, wherein the first security protection manner is a security protection manner between the second terminal device and the third terminal device; and
sending, by the second terminal device, the first security protection manner to the first terminal device, wherein the first security protection manner is a security protection manner between the first terminal device and the second terminal device.

13. The method according to claim 12, wherein the method further comprises:
receiving, by the second terminal device, first service information sent by the first terminal device, wherein the first service information is service information corresponding to the service to be used by the first terminal device; and
sending, by the second terminal device, the first service information to the third terminal device.

14. The method according to claim 11 or 12, wherein the method further comprises:
receiving, by the second terminal device, a security capability that is of the first terminal device and that is sent by the first terminal device;
sending, by the second terminal device, the security capability of the first terminal device and a security capability of the second terminal device to the third terminal device;
receiving, by the second terminal device, a first encryption algorithm and a first integrity protection algorithm that are sent by the third terminal device; and
sending, by the second terminal device, the first encryption algorithm and the first integrity protection algorithm to the first terminal device.

15. The method according to claim 14, wherein the method further comprises:
receiving, by the second terminal device, first protection indication information sent by the first terminal device, wherein the first protection indication information indicates a protection mechanism between the first terminal device and the third terminal device;
sending, by the second terminal device, the first protection indication information to the third terminal device;
receiving, by the second terminal device, a first message sent by the third terminal device, wherein the first message carries second protection indication information; and
sending, by the second terminal device, a second message to the first terminal device, wherein the second message carries the second protection indication information.

16. The method according to claim 15, wherein the sending, by the second terminal device, a second message to the first terminal device comprises:
performing, by the second terminal device, integrity verification on the first message by using a first shared key and the first integrity protection algorithm, wherein the first shared key is a shared key between the second terminal device and the third terminal device;
when the verification succeeds, generating, by the second terminal device, the second message, and performing integrity protection on the second message by using a second shared key and the first integrity protection algorithm, wherein the second message carries the second protection indication information, and the second shared key is a shared key between the first terminal device and the second terminal device; and
sending, by the second terminal device, the second message to the first terminal device.

17. A communication method, wherein the method comprises:
receiving, by a third terminal device, a first security policy sent by a second terminal device, wherein the first security policy is a security policy that is determined by a first terminal device and that corresponds to a service to be used by the first terminal device, and the first terminal device communicates with the third terminal device via the second terminal device;
determining, by the third terminal device, a first security protection manner according to the first security policy; and
sending, by the third terminal device, the first security protection manner to the second terminal device, wherein the first security protection manner is a security protection manner between the second terminal device and the third terminal device.

18. The method according to claim 17, wherein the method further comprises:
receiving, by the third terminal device, first service information sent by the second terminal device, wherein the first service information is service information corresponding to the service to be used by the first terminal device; and
determining, by the third terminal device based on the first service information, a second security policy corresponding to the service to be used by the first terminal device; and
the determining, by the third terminal device, a first security protection manner according to the first security policy comprises:
determining, by the third terminal device, the first security protection manner according to the first security policy and the second security policy.

19. The method according to claim 17 or 18, wherein the method further comprises:
receiving, by the third terminal device, a security capability of the first terminal device and a security capability of the second terminal device that are sent by the second terminal device;
determining, by the third terminal device, a first encryption algorithm and a first integrity protection algorithm based on a security capability of the third terminal device, the security capability of the first terminal device, and the security capability of the second terminal device; and
sending, by the third terminal device, the first encryption algorithm and the first integrity protection algorithm to the second terminal device.

20. The method according to claim 19, wherein the method further comprises:
receiving, by the third terminal device, first protection indication information sent by the second terminal device, wherein the first protection indication information indicates a protection mechanism between the first terminal device and the third terminal device;
determining, by the third terminal device, second protection indication information based on the first protection indication information, wherein the second protection indication information indicates the protection mechanism between the first terminal device and the third terminal device; and
sending, by the third terminal device, a first message to the second terminal device, wherein the first message carries the second protection indication information.

21. The method according to claim 20, wherein before the sending, by the third terminal device, a first message to the second terminal device, the method further comprises:
when the second protection indication information indicates a hop-by-hop protection mechanism, performing, by the third terminal device, integrity protection on the first message by using a first shared key and the first integrity protection algorithm, wherein the first shared key is a shared key between the second terminal device and the third terminal device.

22. A first terminal device, wherein the first terminal device comprises:
a processing module, configured to determine a first security policy corresponding to a service to be used by the first terminal device; and
a transceiver module, configured to send the first security policy to a second terminal device, wherein the first terminal device communicates with a third terminal device via the second terminal device, wherein
the transceiver module is further configured to receive a first security protection manner sent by the second terminal device, wherein the first security protection manner is a security protection manner between the first terminal device and the second terminal device.

23. The first terminal device according to claim 22, wherein the transceiver module is further configured to:
send first service information to the second terminal device, wherein the first service information is service information corresponding to the service to be used by the first terminal device.

24. The first terminal device according to claim 22 or 23, wherein the transceiver module is further configured to:
send a security capability of the first terminal device to the second terminal device; and
receive a first encryption algorithm and a first integrity protection algorithm that are sent by the second terminal device.

25. The first terminal device according to claim 24, wherein the transceiver module is further configured to:
send first protection indication information to the second terminal device, wherein the first protection indication information indicates a protection mechanism between the first terminal device and the third terminal device; and
receive a second message sent by the second terminal device, wherein the second message carries second protection indication information, and the second protection indication information indicates the protection mechanism between the first terminal device and the third terminal device.

26. The first terminal device according to claim 25, wherein the transceiver module is further configured to:
receive the second message sent by the second terminal device, wherein the second message carries the second protection indication information, the second message is obtained by performing integrity protection on the second message by using a second shared key and the first integrity protection algorithm, and the second shared key is a shared key between the first terminal device and the second terminal device;
perform integrity verification on the second message by using the second shared key and the first integrity protection algorithm; and
when the verification succeeds, determine a hop-by-hop protection mechanism indicated by the second protection indication information.

27. A second terminal device, wherein the second terminal device comprises:
a transceiver module, configured to: receive a first security policy sent by a first terminal device, wherein the first security policy is a security policy that is determined by the first terminal device and that corresponds to a service to be used by the first terminal device, and the first terminal device communicates with a third terminal device via the second terminal device; send the first security policy to the third terminal device; receive a first security protection manner sent by the third terminal device, wherein the first security protection manner is a security protection manner between the second terminal device and the third terminal device; and send the first security protection manner to the first terminal device, wherein the first security protection manner is a security protection manner between the first terminal device and the second terminal device.

28. The second terminal device according to claim 27, wherein the transceiver module is further configured to:
receive first service information sent by the first terminal device, wherein the first service information is service information corresponding to the service to be used by the first terminal device; and send the first service information to the third terminal device.

29. The second terminal device according to claim 27 or 28, wherein the transceiver module is further configured to:
receive a security capability that is of the first terminal device and that is sent by the first terminal device; send the security capability of the first terminal device and a security capability of the second terminal device to the third terminal device; receive a first encryption algorithm and a first integrity protection algorithm that are sent by the third terminal device; and send the first encryption algorithm and the first integrity protection algorithm to the first terminal device.

30. The second terminal device according to claim 29, wherein the transceiver module is further configured to:
receive first protection indication information sent by the first terminal device, wherein the first protection indication information indicates a protection mechanism between the first terminal device and the third terminal device; send the first protection indication information to the third terminal device; receive a first message sent by the third terminal device, wherein the first message carries second protection indication information; and send a second message to the first terminal device, wherein the second message carries the second protection indication information.

31. The second terminal device according to claim 30, wherein the transceiver module is specifically configured to:
perform integrity verification on the first message by using a first shared key and the first integrity protection algorithm, wherein the first shared key is a shared key between the second terminal device and the third terminal device; when the verification succeeds, generate the second message, and perform integrity protection on the second message by using a second shared key and the first integrity protection algorithm, wherein the second message carries the second protection indication information, and the second shared key is a shared key between the first terminal device and the second terminal device; and send the second message to the first terminal device.

32. A third terminal device, wherein the third terminal device comprises:
a transceiver module, configured to receive a first security policy sent by a second terminal device, wherein the first security policy is a security policy that is determined by a first terminal device and that corresponds to a service to be used by the first terminal device, and the first terminal device communicates with the third terminal device via the second terminal device; and
a processing module, configured to determine a first security protection manner according to the first security policy, wherein
the transceiver module is further configured to send the first security protection manner to the second terminal device, wherein the first security protection manner is a security protection manner between the second terminal device and the third terminal device.

33. The third terminal device according to claim 32, wherein the transceiver module is further configured to:
receive first service information sent by the second terminal device, wherein the first service information is service information corresponding to the service to be used by the first terminal device;
the processing module is further configured to:
determine, based on the first service information, a second security policy corresponding to the service to be used by the first terminal device; and
the processing module is specifically configured to:
determine the first security protection manner according to the first security policy and the second security policy.

34. The third terminal device according to claim 32 or 33, wherein the transceiver module is further configured to:
receive a security capability of the first terminal device and a security capability of the second terminal device that are sent by the second terminal device;
the processing module is further configured to:
determine a first encryption algorithm and a first integrity protection algorithm based on a security capability of the third terminal device, the security capability of the first terminal device, and the security capability of the second terminal device; and
the transceiver module is further configured to:
send the first encryption algorithm and the first integrity protection algorithm to the second terminal device.

35. The third terminal device according to claim 34, wherein the transceiver module is further configured to:
receive first protection indication information sent by the second terminal device, wherein the first protection indication information indicates a protection mechanism between the first terminal device and the third terminal device;
the processing module is further configured to:
determine second protection indication information based on the first protection indication information, wherein the second protection indication information indicates the protection mechanism between the first terminal device and the third terminal device; and
the transceiver module is further configured to:
send a first message to the second terminal device, wherein the first message carries the second protection indication information.

36. The third terminal device according to claim 35, wherein the processing module is further configured to:
when the second protection indication information indicates a hop-by-hop protection mechanism, perform integrity protection on the first message by using a first shared key and the first integrity protection algorithm, wherein the first shared key is a shared key between the second terminal device and the third terminal device.
